# EUROPEAN PATENT APPLICATION

(11) **EP 4 615 114 A2**
(43) Date of publication of application: **10.09.2025**
(21) Application number: 25162285.8
(22) Date of filing: 25.05.2020
(51) Int. Cl.: H04W 72/12

(54) **PPDU SENDING METHOD AND RECEIVING METHOD, AND COMMUNICATION APPARATUS**

(30) Priority: 28.05.2019 CN 201910450927
(62) Divisional of application: 20813567.3
(71) Applicant: Huawei Technologies Co., Ltd., Shenzhen, Guangdong 518129 (CN)
(72) Inventor: HUANG, Guogang, Shenzhen, 518129 (CN); LI, Yunbo, Shenzhen, 518129 (CN); GUO, Yuchen, Shenzhen, 518129 (CN)
(74) Representative: Gill Jennings & Every LLP

(57) **Abstract**

A PPDU sending method and receiving method, and a communication apparatus are provided. A special BSS is constructed based on an AP coordinated set, all APs in the AP coordinated set are used as one special AP, the AP coordinated set is used to serve a first station, and a physical layer preamble of a PPDU sent by each AP in the AP coordinated set carries a BSS color of the special BSS. In this way, when a PPDU of the special AP is sent by a first AP in the AP coordinated set, a physical layer preamble of the PPDU sent by the first AP is the same as a physical layer preamble of a PPDU sent by another AP, namely, a second AP, in the AP coordinated set.

## Description

This application claims priority to Chinese Patent Application No. 2019104509278, filed with the China National Intellectual Property Administration on May 28, 2019 and entitled "PPDU SENDING METHOD AND RECEIVING METHOD, AND COMMUNICATION APPARATUS", which is incorporated herein by reference in its entirety.

### TECHNICAL FIELD

Embodiments of this application relate to the field of mobile communication technologies, and in particular, to a PPDU sending method and receiving method, and a communication apparatus.

### BACKGROUND

With continuous development of technologies, access points (access points, APs) need to be deployed in more and more places. One AP can serve a plurality of stations (stations, STAs) that are in coverage of the AP, and the AP and the plurality of STAs served by the AP form a basic service set (basic service set, BSS). As APs are deployed increasingly densely, an overlapping area exists between different BSSs. As a result, interference exists between the different BSSs, and this causes a limited network capacity.

To reduce the interference between the BSSs, a multi-AP coordinated transmission manner is proposed in the industry. Common multi-AP coordinated transmission manners mainly include a coordinated scheduling manner, a coordinated beamforming manner, and a joint transmission manner. When a downlink PPDU is sent in the multi-AP coordinated transmission manner, a plurality of APs participating in coordinated transmission include a primary AP and at least one secondary AP. The primary AP sends a downlink synchronization (Synchronization, SYNC) frame to each secondary AP. The secondary AP waits for, after receiving the downlink synchronization frame, a short interframe space (short interframe space, SIFS) before sending a downlink PLCP protocol data unit (PLCP protocol data unit, PPDU) synchronously with the primary AP. When an uplink PPDU is sent in the multi-AP coordinated transmission manner, an AP sends a trigger (trigger) frame to a STA, so that the STA synchronously sends the uplink PPDU after specific time based on the trigger frame. The uplink PPDU and the downlink PPDU are collectively referred to as PPDUs. Using the 802.11n protocol as an example, in a process of sending a PPDU, a media access control (media access control, MAC) layer of a transmit end generates a MAC protocol data unit (MAC protocol data unit, MPDU) based on a MAC service data unit (MAC service data unit, MSDU), and a physical (physical, PHY) layer of the transmit end encapsulates the MPDU generated by the MAC layer into the PPDU, and transmits the PPDU to a receive end through an antenna. When the AP is the transmit end, the STA is the receive end; or when the STA is the transmit end, the AP is the receive end.

Usually, one PPDU includes a physical layer preamble part and a data part. When the PPDU is sent in the multi-AP coordinated transmission manner, the transmit end sends the PPDU to the receive end, and the receive end determines, based on the physical layer preamble included in the PPDU, whether there is an MPDU, for the receive end, needing to be received in the PPDU. In this process, if physical layer preamble parts of PPDUs sent by different transmit ends are different, the receive end cannot determine, based on the physical layer preambles, whether there is an MPDU, for the receive end, needing to be received. This phenomenon is referred to as mutual interference between physical layer preambles. To avoid the phenomenon of mutual interference between physical layer preambles, it is required in the industry that physical layer preambles of PPDUs sent by different transmit ends are the same. However, when PPDUs are sent in the multi-AP coordinated transmission manner, and when physical layer preambles of the PPDUs sent by all transmit ends are the same, no solution is proposed in the industry for how to design formats of the physical layer preambles of the PPDUs.

### SUMMARY

Embodiments of this application provide a PPDU sending method and receiving method, and a communication apparatus. A special BSS is constructed based on an AP coordinated set, all APs in the AP coordinated set are used as one special AP, and when a physical layer preamble of a PPDU includes a special BSS color, the AP coordinated set is used to serve a first station. When a PPDU of the special AP is sent by a first AP in the AP coordinated set, a physical layer preamble part of the PPDU sent by the first AP is the same as a physical layer preamble part of a PPDU sent by another AP, namely, a second AP, in the AP coordinated set. Therefore, a phenomenon of mutual interference between physical layer preambles can be eliminated, and a success rate of correctly receiving a PPDU by a receive end can be increased.

According to a first aspect, an embodiment of this application provides a physical layer convergence protocol protocol data unit (PPDU) sending method. The method may be applied to an AP or may be applied to a chip in the AP. The following describes the method by using an example in which the method is applied to the AP. The method includes: A special BSS is constructed based on an AP coordinated set, all APs in the AP coordinated set are used as one special AP, the AP coordinated set is used to serve a first station, and a physical layer preamble of a PPDU sent by each AP in the AP coordinated set carries a BSS color of the special BSS, and the like. In this way, when a PPDU of the special AP is sent by a first AP in the AP coordinated set, a physical layer preamble part of the PPDU sent by the first AP is the same as a physical layer preamble part of a PPDU sent by another AP, namely, a second AP, in the AP coordinated set. Therefore, a phenomenon of mutual interference between physical layer preambles can be eliminated, and a success rate of correctly receiving a PPDU by a STA can be increased. In addition, after the special BSS is introduced, STAs that originally interfere with each other may be associated with the special BSS, so that the STAs that interfere with each other are served by a same AP, namely, the special AP. Therefore, the phenomenon of mutual interference between physical layer preambles can be eliminated, and the success rate of correctly receiving a PPDU by a STA can be increased.

In a feasible design, signaling information includes a signaling A (SIG-A) field and a signaling B (SIG-B) field, the SIG-A field includes transmission parameters of a first PPDU and a second PPDU, the SIG-B field includes resource allocation information that carries data of the first STA, and the SIG-A field includes the special BSS color. In this solution, signaling information in a first physical layer preamble includes the SIG-A field and the SIG-B field. The transmission parameters of the first PPDU and the second PPDU and the special BSS color are included in the SIG-A field, and the resource allocation information that carries the data of the first STA is included in the SIG-B field, so that physical layer preambles of the first PPDU and the first PPDU are the same. Therefore, the phenomenon of mutual interference between physical layer preambles can be eliminated, and the success rate of correctly receiving a PPDU by a STA can be increased.

In a feasible design, the SIG-A field further includes indication information, and the indication information is used to indicate whether the first PPDU is a coordinately transmitted PPDU; or the special BSS color is further used to indicate that the first PPDU is a coordinately transmitted PPDU. In this solution, the indication information explicitly indicates whether the first PPDU is a coordinately transmitted PPDU, or the special BSS color implicitly indicates that the first PPDU is a coordinately transmitted PPDU, so as to implement an objective of indicating the coordinately transmitted PPDU to the STA.

In a feasible design, the SIG-B field further includes an AP selection field, and the AP selection field is used to indicate, to the first station, the first AP that sends the first PPDU in the AP coordinated set. In this solution, the AP selection field is carried in the SIG-B field of the physical layer preamble part, to implement an objective of indicating a data source to the first STA.

In a feasible design, before sending the first PPDU, the first AP further sends a beacon (beacon) frame, where the beacon frame carries at least one of the following information: a flag bit of the special BSS and AP indication information, where the flag bit of the special BSS is used to indicate that the special BSS is used for coordinated transmission, and the AP indication information is used to indicate an AP in the AP coordinated set. In this solution, the first AP broadcasts the beacon frame that carries the flag bit of the special BSS, the AP indication information, and the like, to implement a communication procedure and negotiation between the AP and the STA.

In a feasible design, before sending the first PPDU, the first AP further sends the beacon (beacon) frame, where the beacon frame carries a BSS identifier of a BSS including the AP in the AP coordinated set, and the BSS identifier is used for communication between the first AP and the second AP. The first AP receives a response frame sent by a second station included in the second AP, where the second station is associated with the first AP, and the response frame is used to indicate whether the second AP joins the AP coordinated set. In this solution, communication between APs is implemented.

In a feasible design, a data part of the first PPDU further includes data of a station associated with the first AP. In this solution, data of the first PPDU sent by the first AP includes data of a STA served by the AP coordinated set and data of a STA served by the first AP, so that an objective of fully utilizing a data part of a PPDU is implemented, and interaction between the first AP and the STA is reduced.

In a feasible design, before sending the first PPDU, the first AP further sends a mapping relationship between the first AP and the first station to a distributed system (DS), so that the DS sends the data of the first station to the first AP; or the first AP sends, to the second AP, at least one media access control layer service data unit (MSDU) of the first station, a traffic identifier (TID) of the at least one MSDU, and a start number of a sequence number (SN) of the TID. The TID is used to indicate a traffic type of the MSDU, and the start number of the SN is used to indicate a start SN allocated by the second AP to each MSDU. In this solution, data sharing in joint transmission is implemented.

In a feasible design, before sending the first PPDU, the first AP further sends a synchronization frame to another AP in the AP coordinated set, where the synchronization frame carries at least one of the following information: long training field (LTF) quantity information, used to indicate a quantity of LTFs in a PPDU sent by each AP in the AP coordinated set; an association identifier (Association identifier, AID) of the first station; a traffic identifier (TID) of a to-be-transmitted MSDU, where the TID is used to indicate a traffic type of the MSDU; a sequence number (sequence number, SN) of the TID, where the SN number is used to indicate a specific to-be-transmitted MSDU; no-fragmentation, used to indicate whether to fragment the MSDU; and fragment threshold indication information, used to indicate to fragment the MSDU when a length of the MSDU meets a preset condition. In this solution, the first AP sends the synchronization frame to the second AP, to implement an objective of coordinated transmission performed by the first AP and the second AP.

According to a second aspect, an embodiment of this application provides a physical layer convergence protocol protocol data unit (PPDU) receiving method, including: A first station (STA) receives a first PPDU sent by a first AP, where the first PPDU is generated by the first AP, the first PPDU includes a first physical layer preamble, the first physical layer preamble is the same as a second physical layer preamble, the second physical layer preamble is included in a second PPDU, the second PPDU is generated by a second AP, the first AP and the second AP are included in a same AP coordinated set, and the AP coordinated set serves the first STA, where the first physical layer preamble includes signaling information used to parse the first PPDU, the signaling information includes a special basic service set (BSS) color, and the special BSS color is used to indicate a special BSS established by the AP coordinated set; and the first STA obtains data of the first STA by parsing a data part of the first PPDU based on the special BSS color and the signaling information. In this solution, a PPDU that is sent by each AP in the AP coordinated set and that is received by a STA carries a BSS color of a special BSS, and the like, and physical layer preamble parts of all PPDUs are the same. Therefore, a phenomenon of mutual interference between physical layer preambles can be eliminated, and a success rate of correctly receiving a PPDU by a STA can be increased. In addition, after the special BSS is introduced, STAs that originally interfere with each other may be associated with the special BSS, so that the STAs that interfere with each other are served by a same AP, namely, the special AP. Therefore, the phenomenon of mutual interference between physical layer preambles can be eliminated, and the success rate of correctly receiving a PPDU by a STA can be increased.

In a feasible design, the signaling information includes a signaling A (SIG-A) field and a signaling B (SIG-B) field, the SIG-A field includes transmission parameters of the first PPDU and the second PPDU, the SIG-B field includes resource allocation information that carries the data of the first STA, and the SIG-A field includes the special BSS color. In this solution, the signaling information in the first physical layer preamble includes the SIG-A field and the SIG-B field. The transmission parameters of the first PPDU and the second PPDU and the special BSS color are included in the SIG-A field, and the resource allocation information that carries the data of the first STA is included in the SIG-B field, so that physical layer preambles of the first PPDU and the first PPDU are the same. Therefore, the phenomenon of mutual interference between physical layer preambles can be eliminated, and the success rate of correctly receiving a PPDU by a STA can be increased.

In a feasible design, the SIG-A field further includes indication information, and the indication information is used to indicate whether the first PPDU is a coordinately transmitted PPDU; or the special BSS color is further used to indicate that the first PPDU is a coordinately transmitted PPDU. In this solution, the indication information explicitly indicates whether the first PPDU is a coordinately transmitted PPDU, or the special BSS color implicitly indicates that the first PPDU is a coordinately transmitted PPDU, so as to implement an objective of indicating the coordinately transmitted PPDU to the STA.

In a feasible design, the SIG-B field further includes an AP selection field, and the AP selection field is used to indicate, to the first station, the first AP that sends the first PPDU in the AP coordinated set. In this solution, the AP selection field is carried in the SIG-B field of the physical layer preamble part, to implement an objective of indicating a data source to the first STA.

In a feasible design, before receiving the first PPDU sent by the first AP, the first station (STA) further receives a beacon frame sent by the first AP, where the beacon frame carries at least one of the following information: a flag bit of the special BSS and AP indication information, where the flag bit of the special BSS is used to indicate that the special BSS is used for coordinated transmission, and the AP indication information is used to indicate an AP in the AP coordinated set. The first STA determines the flag bit of the special BSS and the AP in the coordinated set based on the beacon frame. In this solution, the first AP broadcasts the beacon frame that carries the flag bit of the special BSS, the AP indication information, and the like, to implement a communication procedure and negotiation between the AP and the STA.

According to a third aspect, an embodiment of this application provides a communication apparatus. The apparatus may be an access point (AP), or may be a chip in the access point (AP). The apparatus has a function of implementing the AP in the foregoing embodiments. The function may be implemented by hardware, or may be implemented by hardware by executing corresponding software. The hardware or the software includes one or more units corresponding to the foregoing function.

In a possible design, when the apparatus is the access point (AP), the AP includes a processing module and a transceiver module. The processing module may be, for example, a processor. The transceiver module may be, for example, a transceiver, and the transceiver may include a radio frequency circuit and a baseband circuit.

Optionally, the apparatus may further include a storage unit, and the storage unit may be, for example, a memory. When the AP includes the storage unit, the storage unit is configured to store computer-executable instructions, the processing module is connected to the storage unit, and the processing module executes the computer-executable instructions stored in the storage unit, so that the AP performs the method related to the function of the AP.

In another possible design, when the apparatus is the chip in the access point (AP), the chip includes a processing module and a transceiver module. The processing module may be, for example, a processor, and the transceiver module may be, for example, an input/output interface, a pin, or a circuit on the chip. Optionally, the apparatus may further include a storage unit, and the processing module may execute computer-executable instructions stored in the storage unit, so that the chip in the terminal performs the method related to the function of the access point (AP) in any one of the foregoing aspects.

Optionally, the storage unit is a storage unit in the chip, for example, a register or a cache. The storage unit may alternatively be a storage unit that is in the access point (AP) and that is located outside the chip, for example, may be a read-only memory (read-only memory, ROM for short), another type of static storage device that can store static information and instructions, or a random access memory (random access memory, RAM for short).

The processor mentioned anywhere above may be a general purpose central processing unit (Central Processing Unit, CPU for short), a microprocessor, an application-specific integrated circuit (application-specific integrated circuit, ASIC for short), or one or more integrated circuits configured to control program execution in the communication method in the foregoing aspects.

According to a fourth aspect, this application provides a communication apparatus. The apparatus may be a STA, or may be a chip in the STA. The apparatus has a function of implementing various embodiments related to the STA in the foregoing aspects. The function may be implemented by hardware, or may be implemented by hardware by executing corresponding software. The hardware or the software includes one or more units corresponding to the foregoing function.

In a possible design, when the apparatus is the STA, the STA includes a processing module and a transceiver module. The processing module may be, for example, a processor, the transceiver module may be, for example, a transceiver, and the transceiver includes a radio frequency circuit. Optionally, the STA further includes a storage unit. The storage unit may be, for example, a memory. When the STA includes the storage unit, the storage unit is configured to store computer-executable instructions, the processing module is connected to the storage unit, and the processing module executes the computer-executable instructions stored in the storage unit, so that the STA performs the method related to the function of the STA in any one of the foregoing aspects.

In another possible design, when the apparatus is the chip in the STA, the chip includes a processing module and a transceiver module. The processing module may be, for example, a processor, and the transceiver module may be, for example, an input/output interface, a pin, or a circuit on the chip. The processing module may execute computer-executable instructions stored in a storage unit, so that the chip in the STA performs the method related to the function of the STA in the foregoing aspects. Optionally, the storage unit is a storage unit in the chip, for example, a register or a cache. The storage unit may further be a storage unit that is in the access point (AP) and that is outside the chip, for example, may be a ROM, another type of static storage device that can store static information and instructions, or a RAM.

The processor mentioned anywhere above may be a CPU, a microprocessor, an ASIC, or one or more integrated circuits for controlling program execution of the foregoing communication method.

According to a fifth aspect, a computer storage medium is provided. The computer storage medium stores program code, and the program code is used to indicate instructions of performing the method according to either of the first aspect and the second aspect or any possible implementation thereof.

According to a sixth aspect, a processor is provided. The processor is coupled to a memory, and is configured to perform the method according to either of the first aspect and the second aspect or any possible implementation thereof.

According to a seventh aspect, a computer program product including instructions is provided. When the computer program product runs on a computer, the computer is enabled to perform the method according to either of the first aspect and the second aspect or any possible implementation thereof.

Embodiments of this application provide a PPDU sending method and receiving method, and a communication apparatus. A special BSS is constructed based on an AP coordinated set, all APs in the AP coordinated set are used as one special AP, the AP coordinated set is used to serve a first station, and a physical layer preamble of a PPDU sent by each AP in the AP coordinated set carries a BSS color of the special BSS, and the like. In this way, when a PPDU of the special AP is sent by a first AP in the AP coordinated set, a physical layer preamble part of the PPDU sent by the first AP is the same as a physical layer preamble part of a PPDU sent by another AP, namely, a second AP, in the AP coordinated set. Therefore, a phenomenon of mutual interference between physical layer preambles can be eliminated, and a success rate of correctly receiving a PPDU by a STA can be increased. In addition, a new coordination architecture is proposed. The special BSS is introduced, and STAs that originally interfere with each other are associated with the special BSS, so that the STAs that interfere with each other are served by a same AP, namely, the special AP, thereby eliminating the interference between physical layer preambles. A physical layer preamble suitable for coordinated transmission is designed to increase the success rate of correctly receiving a PPDU by a STA.

### BRIEF DESCRIPTION OF DRAWINGS

FIG. 1 is a schematic diagram of a coordinated scheduling manner;
FIG. 2 is a schematic diagram of a coordinated beamforming manner;
FIG. 3 is a schematic diagram of a joint transmission manner;
FIG. 4 is a schematic diagram of sharing information between APs through an air interface;
FIG. 5 is a schematic diagram of sending a PPDU in a multi-AP coordinated transmission manner;
FIG. 6 is a schematic diagram of a format of an MU PPDU in 802.11ax;
FIG. 7A is a schematic diagram of a scenario to which a PPDU sending method according to an embodiment of this application is applicable;
FIG. 7B is a schematic diagram of the special BSS constructed in FIG. 7A;
FIG. 8 is a schematic diagram of a structure of an AP in an AP coordinated set and a structure of a STA in a PPDU sending method according to an embodiment of this application;
FIG. 9 is a flowchart of a PPDU sending method according to an embodiment of this application;
FIG. 10 is a schematic diagram of communication between APs in a PPDU sending method according to an embodiment of this application;
FIG. 11 is a schematic diagram of format classification of a PPDU in a PPDU sending method according to an embodiment of this application;
FIG. 12 is a schematic diagram of a SYNC frame in a PPDU sending method according to an embodiment of this application;
FIG. 13A is a schematic diagram of sending a PPDU according to an embodiment of this application;
FIG. 13B is another schematic diagram of sending a PPDU according to an embodiment of this application;
FIG. 13C is still another schematic diagram of sending a PPDU according to an embodiment of this application;
FIG. 14 is a schematic diagram of another network architecture to which a PPDU sending method according to an embodiment of this application is applicable;
FIG. 15 is a flowchart of a PPDU sending method according to an embodiment of this application;
FIG. 16 is another schematic diagram of sending a PPDU according to an embodiment of this application;
FIG. 17 is still another schematic diagram of sending a PPDU according to an embodiment of this application;
FIG. 18(a) and FIG. 18(b) are a schematic diagram of arrangement of the subfields of the SIG-A field and the subfields of the SIG-B field in FIG. 16 and FIG. 17;
FIG. 19 is still another schematic diagram of sending a PPDU according to an embodiment of this application;
FIG. 20 is a flowchart of a PPDU sending method according to an embodiment of this application;
FIG. 21 is another schematic diagram of sending a PPDU according to an embodiment of this application;
FIG. 22 is a schematic diagram of a structure of a communication apparatus according to an embodiment of this application;
FIG. 23 is a schematic diagram of a structure of another communication apparatus according to an embodiment of this application;
FIG. 24 is a schematic diagram of a structure of still another communication apparatus according to an embodiment of this application; and
FIG. 25 is a schematic block diagram of still another communication apparatus according to an embodiment of this application.

### DESCRIPTION OF EMBODIMENTS

### Embodiment 1

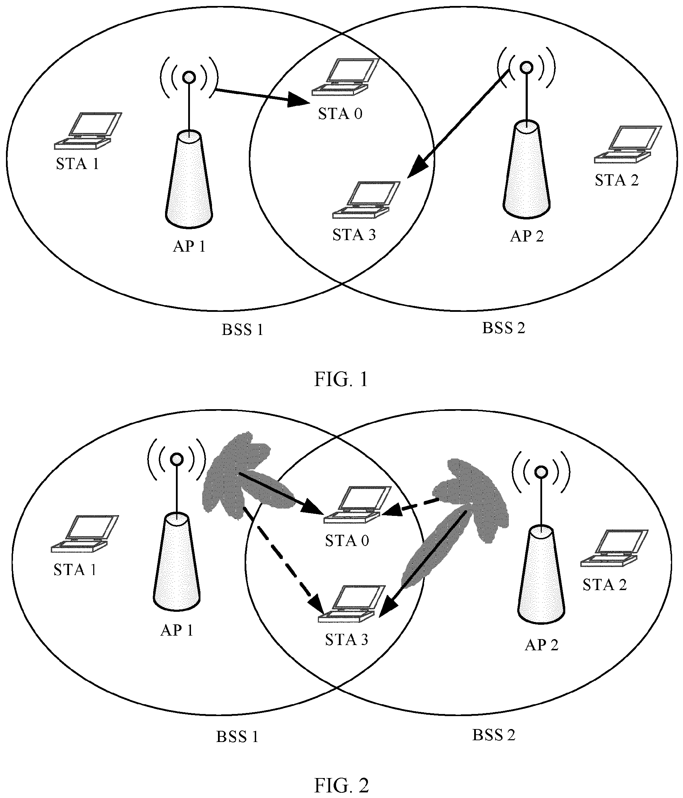

A multi-AP coordinated manner is an important means to reduce interference between BSSs. Common multi-AP coordinated transmission manners mainly include a coordinated scheduling manner, a coordinated beamforming manner, and a joint transmission manner. For example, refer to FIG. 1 to FIG. 3.

FIG. 1 is a schematic diagram of a coordinated scheduling manner. In this manner, a plurality of APs reduce mutual interference between BSSs by using technologies such as coordinating resource unit (resource unit, RU) allocation and performing power control. Each AP sends a data packet of the AP, and does not need to share the data packet. Refer to FIG. 1. An AP 1 and an AP 2 respectively construct a BSS 1 and a BSS 2. The AP 1, a STA 0, and a STA 1 form the BSS 1, and the AP 2, a STA 2, and a STA 3 form the BSS 2. The STA 0 and the STA 3 are located in an overlapping area between the BSS 1 and the BSS 2. Consequently, the STA 0 suffers from interference caused by transmission by the BSS 2, and the STA 3 suffers from interference caused by transmission by the BSS 1. To avoid the interference, when the AP 1 sends data to the STA 0 or the AP 2 sends a data packet to the STA 3, the AP 1 and the AP 2 reduce interference between the BSSs by coordinating RU allocation, performing power control, and the like. For example, the AP 1 sends the data to the STA 0 on an RU 1, and the AP 2 sends the data to the STA 3 on an RU 2.

FIG. 2 is a schematic diagram of a coordinated beamforming manner. In this manner, a plurality of APs reduce interference between BSSs by using a multi-antenna technology, namely, interference nulling (interference nulling). For example, when serving a STA 0 of a BSS 1, as shown by a solid arrow in the figure, an AP 1 points a null point of a transmit signal to a STA 3 that is receiving a signal in a BSS 2, as shown by a dotted arrow in the figure. Similarly, when serving the STA 3 of the BSS 2, an AP 2 points a null point of a transmit signal to the STA 0 that is receiving a signal in the BSS 1, as shown by a solid arrow in the figure. Each AP transmits a data packet of the AP, and does not need to share the data packet.

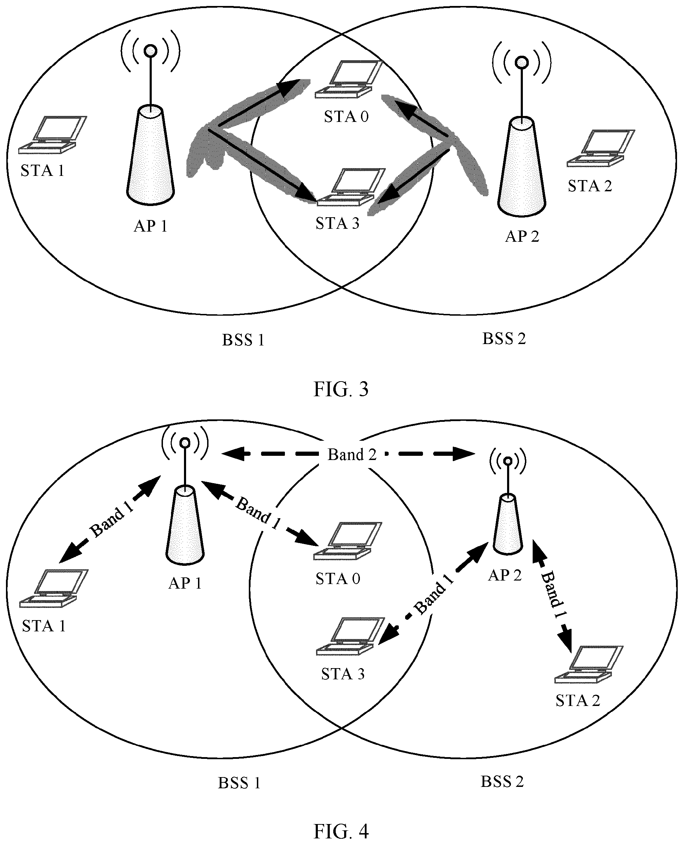

FIG. 3 is a schematic diagram of a joint transmission manner. The joint transmission manner is also referred to as distributed multi-user multiple-input multiple-output (multiple-input multiple-output, MIMO). Data of a plurality of STAs is sent through antennas of all coordinated APs. In this transmission manner, the coordinated APs need to implement accurate frequency synchronization and phase synchronization, and this is very complex. The coordinated APs need to share a data packet. For example, an AP 1 and an AP 2 simultaneously send a same data packet to a STA 0, or the AP 1 and the AP 2 simultaneously send the same data packet to a STA 3.

In the foregoing multi-AP coordinated transmission manners, APs need to share information. For the coordinated scheduling manner and the coordinated beamforming manner, the APs need to share channel information, resource allocation information, a transmission parameter, and the like. In a case of multi-user transmission, the resource allocation information includes multi-user (multi-user, MU) MIMO resource allocation information, orthogonal frequency division multiple access (orthogonal frequency division multiple access, OFDMA) resource allocation information, and the like. For the joint transmission manner, in addition to sharing the channel information, the resource allocation information, the transmission parameter, and the like, the APs need to share an MSDU data packet.

Usually, the APs share information in the following two manners: Manner 1: Information is shared through a backhaul (backhaul) link, where the backhaul link is, for example, an Ethernet-based link. Manner 2: Information is shared through an air interface. For example, FIG. 4 is a schematic diagram of sharing information between APs through an air interface. Refer to FIG. 4. A STA 0 and a STA 1 are associated with a BSS 1, and a STA 2 and a STA 3 are associated with a BSS 2. The AP 1 may communicate with the STA 0 and the STA 1 by using a band 1 (Band 1), and the AP 2 may also communicate with the STA 2 and the STA 3 by using the band 1. When sharing information, the AP 1 and the AP 2 may continue sharing information by using the band 1, or may share information by using another band, for example, a band 2, as shown in FIG. 4. In this case, the AP 1 and the AP 2 are multi-band devices, and the multi-band device means that one device has a plurality of independent radio frequency links. Because a delay of the wired backhaul in Manner 1 is relatively large, delay-sensitive information may be shared in Manner 2, and non-delay-sensitive information may be shared in Manner 1, so as to reduce use of air interface resources.

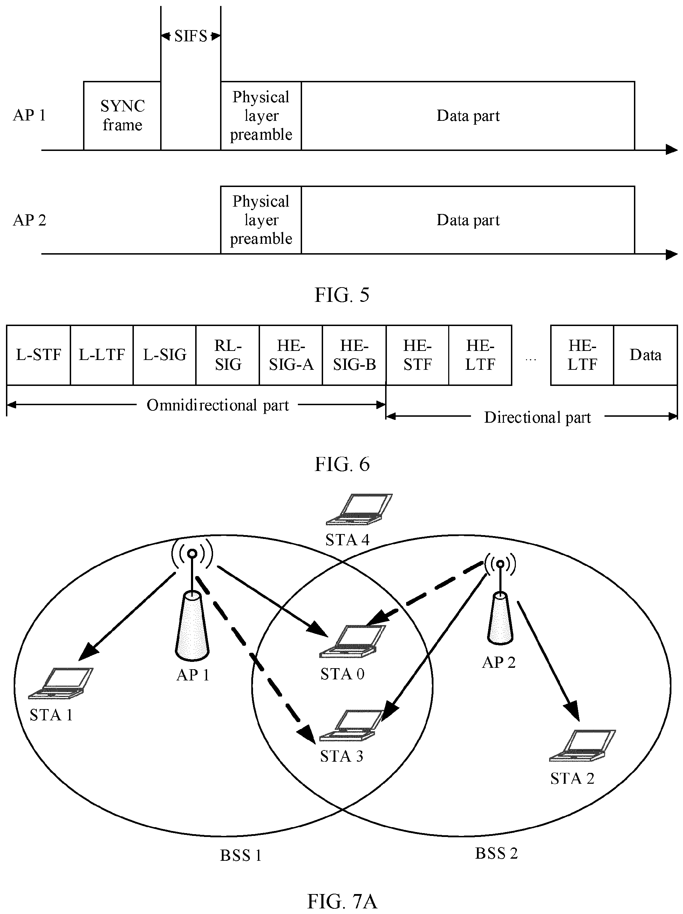

When a downlink PPDU is sent in the foregoing multi-AP coordinated transmission manner, a plurality of APs participating in coordinated transmission include a primary AP and at least one secondary AP. The primary AP sends a SYNC frame to each secondary AP. The secondary AP waits for, after receiving the synchronization frame, a short interframe space (short interframe space, SIFS) before sending a PLCP protocol data unit (PLCP protocol data unit, PPDU) synchronously with the primary AP. The PPDU includes a physical layer preamble and a data part. For example, FIG. 5 is a schematic diagram of sending a PPDU in a multi-AP coordinated transmission manner. As shown in FIG. 5, an AP 1 and an AP 2 are coordinated APs, the AP 1 is a primary AP, and the AP 2 is a secondary AP. The AP 1 sends a SYNC frame to the AP 2, to synchronize with the AP 2. The AP 2 waits for, after receiving the SYNC frame, an SIFS before sending the PPDU synchronously with the AP 1.

Usually, one PPDU includes a physical layer preamble (PHY preamble) and a data (data) part. For downlink multi-user transmission, the physical layer preamble needs to be sent to all STAs in an omnidirectional sending manner, and the data part needs to be multiplied by a corresponding precoding matrix (precoding matrix, PM), and sent to a target STA. Therefore, the entire PPDU is divided into two parts: an omnidirectional part and a directional part. A part before a signaling B (SIG-B) field in the physical layer preamble and the SIG-B field belong to the omnidirectional part, and the remaining part in the physical layer preamble and the data part belong to the directional part. FIG. 4 is used as an example. If the AP 1 sends a PPDU, an omnidirectional part of the PPDU is sent by the AP 1 to all STAs, for example, the STA 0 and the STA 1 in the BSS 1 in FIG. 4, and a directional part needs to be sent to a target STA in a directional sending manner. The omnidirectional part and the directional part are described in detail below by using a PPDU in the 802.11ax protocol as an example. For example, FIG. 6 is a schematic diagram of a format of an MU PPDU in 802.11ax.

Refer to FIG. 6. An omnidirectional part of the PPDU includes a legacy-short training field (legacy-short training field, L-STF), a legacy-long training field (legacy-long training field, L-LTF), a legacy signaling (legacy signal, L-SIG) field, a repeat legacy signaling (repeat legacy signal, RL-SIG) field, a high efficiency-signaling A (high efficiency-signal-A, HE-SIG-A) field, and a high efficiency-signaling B (high efficiency-signal-B, HE-SIG-B) field. A directional part includes a high efficiency-short training field (high efficiency-short training field, HE-STF), a high efficiency-long training field (high efficiency-long training field, HE-STF), and data. The HE-SIG-A field carries a related parameter sent by the PPDU, for example, a transmission parameter such as a BSS color (color), a modulation and coding scheme (modulation and coding Scheme, MCS), a used guard interval (guard interval, GI) length, or HE-LTE quantity indication information. The HE-SIG-B field carries resource allocation information such as resource unit (resource unit, RU) allocation information and spatial stream allocation information.

It can be learned from FIG. 6 that the HE-SIG-B field and a part before the HE-SIG-B field in the PPDU belong to broadcast information and need to be sent omnidirectionally. Each STA needs to receive the omnidirectional part to determine whether there is data, of the STA, needing to be received. A part after the HE-SIG-B field needs to be multiplied by a PM to implement directional sending. However, in a multi-AP coordinated transmission process, if physical layer preamble parts of PPDUs sent by all coordinated APs are different, the STA cannot determine, based on the physical layer preambles, whether there is an MPDU, for the STA, needing to be received. This phenomenon is referred to as mutual interference between physical layer preambles. To avoid the phenomenon of mutual interference between physical layer preambles during coordinated transmission by APs, it is required in the industry that the physical layer preamble parts of PPDUs sent by all coordinated APs are the same. In this case, a format of a physical layer preamble in an AP coordinated transmission manner needs to be redefined.

In view of this, embodiments of this application provide a PPDU sending method and an apparatus. A physical layer preamble of a PPDU in a multi-AP coordinated transmission manner is designed, to eliminate a phenomenon of mutual interference between physical layer preambles, and increase a success rate of correctly receiving a PPDU by a receive end.

In the embodiments of this application, the word such as "example" or "for example" is used to represent giving an example, an illustration, or a description.

In the embodiments of this application, the STA may be a WLAN user or the like. For example, the STA may be a laptop computer, a personal digital assistant (personal digital assistant, PDA), a mobile phone, or the like. In an example, the STA is connected to an AP through a wireless link that complies with the Wi-Fi protocol, to obtain a general connection to the Internet or another wide area network. In addition, the STA may further include, be implemented as, or referred to as an access terminal, a subscriber station, a subscriber unit, a mobile station, a remote station, a remote terminal, a user terminal, a user agent, user equipment, a user device, or another term. The access terminal may include a cellular phone, a cordless phone, a session initiation protocol (session initiation protocol, SIP) phone, a wireless local loop (wireless local loop, WLL) station, a handheld device having a wireless connection capability, and the like. The AP may include, be implemented as, or referred to as a NodeB, a radio network controller (radio network controller, RNC), an eNodeB, a base station controller (base station controller, BSC), a base transceiver station (base transceiver station, BTS), a base station (base station, BS), a wireless router, or the like.

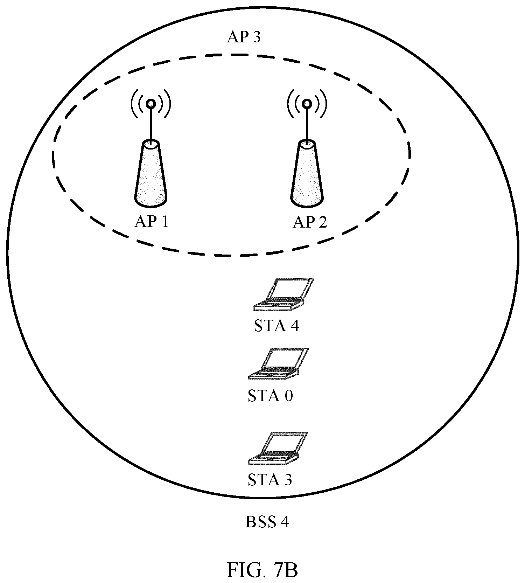

FIG. 7A is a schematic diagram of a scenario to which a PPDU sending method according to an embodiment of this application is applicable. Refer to FIG. 7A. This embodiment of this application is mainly applied to a wireless local area network, for example, a WLAN scenario including a plurality of APs. The scenario includes at least two APs and one STA. In the at least two APs, there is a primary AP, and an AP other than the primary AP is a secondary AP. The primary AP and the secondary AP can receive frames from each other over air interfaces. As shown in FIG. 7A, an AP 1 and an AP 2 respectively construct a BSS 1 and a BSS 2, a STA 0 and a STA 1 are associated with the BSS 1, and a STA 2 and a STA 3 are associated with the BSS 2. Because the STA 0 and the STA 3 are located in an overlapping area between the BSS 1 and the BSS 2, the STA 0 may be interfered by the BSS 2 when receiving a PPDU, and the STA 3 may be interfered by the BSS 1 when receiving a PPDU. Dotted arrows in the figure indicate interference. Therefore, the AP 1 and the AP 2 may cooperate with each other to construct an AP coordinated set, and virtualize a special logical AP, for example, an AP 3, by using the AP coordinated set. The AP 3 constructs a new BSS, for example, a BSS 3, for coordinated transmission, and re-associates an interfered STA with the BSS 3. For example, FIG. 7B is a schematic diagram of the special BSS constructed in FIG. 7A.

Refer to FIG. 7B. A special AP 3 is virtualized from the AP coordinated set. The AP 3 constructs a BSS 3, and the originally interfered STA 0 and the originally interfered STA 3 are re-associated with the BSS 3. In addition, in addition to the originally interfered STAs, STAs in the BSS 3 may further include a STA 4 that is not previously associated with the BSS 1 or the BSS 2. BSS colors of different BSSs are different, to be specific, a BSS color 3 of the BSS 3 is different from a BSS color 1 of the BSS 1 and a BSS color 2 of the BSS 2, and no BSS color conflict exists.

It should be noted that in the scenario shown in FIG. 7A, only the STA 0 to the STA 4 are listed, but this embodiment of this application is not limited thereto. In another feasible implementation, in addition to the STA 1, the BSS 1 may further include another STA; in addition to the STA 2, the BSS 2 may further include another STA; in addition to the STA 0, the STA 3, and the STA 4, the BSS 3 may further include another STA.

In addition, it should be further noted that in this embodiment of this application, one BSS is corresponding to a set of running parameters, and these running parameters are indicated by an AP in a beacon (beacon) frame. A STA joins a BSS through "association", so that the STA becomes a member of the BSS. Usually, one AP may construct a plurality of BSSs, and information about the plurality of BSSs is indicated by using an information element (information element, IE), of multiple basic service set identifiers (Multiple basic service set identifiers, Multiple BSSIDs), carried in a beacon frame of the AP.

It can be learned from FIG. 7B that core devices in this embodiment of this application include APs, for example, the AP 1 and the AP 2, in the AP coordinated set, a special AP, and a station. These core devices are described in detail below.

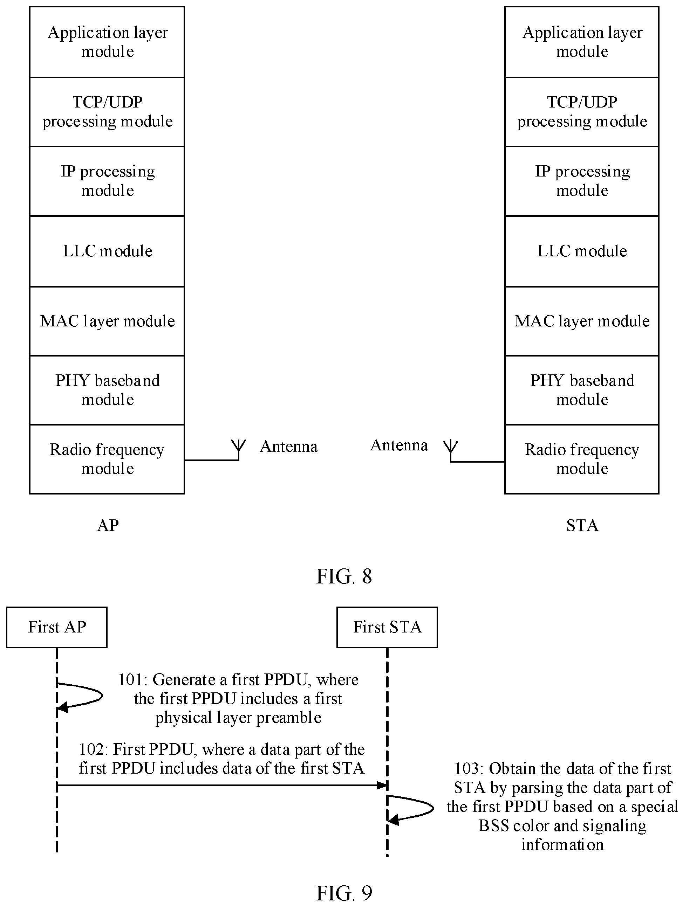

First, the APs in the AP coordinated set and the station are described. FIG. 8 is a schematic diagram of a structure of an AP in an AP coordinated set and a structure of a STA in a PPDU sending method according to an embodiment of this application. Refer to FIG. 8. In this embodiment of this application, each AP in the AP coordinated set includes an application (application) layer module, a transmission control protocol (transmission control protocol, TCP)/user datagram protocol (user datagram protocol, UDP) processing module, an IP processing module, a logical link control (logical link control, LLC) module, a MAC layer module, a PHY baseband module, a radio frequency module, and an antenna. The STA also includes an application layer module, a TCP/UDP module, an IP processing module, an LLC module, a MAC layer module, a PHY baseband module, a radio frequency module, and an antenna.

Second, the special AP is described. In this embodiment of this application, the special AP is an AP obtained by considering the AP coordinated set as a whole. For example, all APs in the AP coordinated set may be considered as one virtual logical AP, to obtain the special AP in this embodiment of this application. In this case, each AP in the AP coordinated set is equivalent to an antenna cluster of the special AP. A primary AP in the AP coordinated set is used to control the special AP to send a PPDU by using a specific AP in the AP coordinated set. For example, the AP 1 and the AP 2 form an AP coordinated set, denoted as {AP 1, AP 2}, and a primary AP in the AP coordinated set is the AP 1. In this case, {AP 1, AP 2} may be used as the AP 3, and the AP 1 and the AP 2 may be used as different antenna clusters of the AP 3. The AP 1 controls the AP 3 to send the PPDU by using the AP 1 or the AP 2.

Based on the special AP 3, a special BSS 3 further exists in the architecture shown in FIG. 7A, and the special BSS 3 includes at least one first station. For example, the first station is the STA 0 and/or the STA 3, the STA 0 is originally served by the AP 1, and the STA 3 is originally served by the AP 2. The STA 0 suffers from interference caused by transmission by the BSS 2, and the STA 3 suffers from interference caused by transmission by the BSS 1. Therefore, to avoid interference between the BSSs, the STA 0 switches to the AP 3, the STA 3 switches to the AP 3, and the AP 3 serves the STA 0 and the STA 3. For another example, the first station is the STA 4, and the STA 4 is not associated with the BSS 1 or the BSS 2, but is directly associated with the BSS 3.

The following describes in detail the PPDU sending method in the embodiments of this application based on FIG. 7A and FIG. 7B. For example, FIG. 9 is a flowchart of a PPDU sending method according to an embodiment of this application. In this embodiment, the PPDU sending method is described in detail from a perspective of interaction between a first AP and a first STA. This embodiment includes the following steps.

101: The first access point (AP) generates a first PPDU, where the first PPDU includes a first physical layer preamble.

The first physical layer preamble is the same as a second physical layer preamble, the second physical layer preamble is included in a second PPDU, the second PPDU is generated by a second AP, the first AP and the second AP are included in a same AP coordinated set, and the AP coordinated set serves the first station (STA), where the first physical layer preamble includes signaling information used to parse the first PPDU, the signaling information includes a special basic service set (BSS) color, and the special BSS color is used to indicate a special BSS established by the AP coordinated set.

For example, refer to FIG. 7A and FIG. 7B. The AP 1 and the AP 2 form an AP coordinated set, a primary AP in the AP coordinated set is the AP 1, and a secondary AP is the AP 2. Unless otherwise specified, the first AP may be understood as the primary AP, namely, the AP 1, and the second AP may be understood as the secondary AP, namely, the AP 2. All APs in the AP coordinated set form one special AP, namely, the AP 3, the AP 3 is configured to serve the first station, and the first station may be one or more of the STA 0, the STA 3, or the STA 4. When the AP 3 serves the first station, assuming that the AP 1 controls a PPDU of the AP 3 to be sent from the AP 1, the AP 1 generates the first PPDU, where a data part of the first PPDU includes data of the first STA. In addition, the first physical layer preamble of the first PPDU is the same as the second physical layer preamble of the second PPDU generated by the AP 2, and the AP 2 is also equivalent to an antenna cluster of the AP 3. In other words, the first PPDU and the second PPDU are PPDUs sent by using different antenna clusters of the AP 3. When a STA uses a coordinated scheduling manner or a coordinated beamforming manner, and data of the STA is included in the data part of the first PPDU or a data part of the second PPDU (where a data part is specifically included in a specific PPDU is determined by using an AP selection field of the STA), the first physical layer preamble of the first PPDU is the same as the second physical layer preamble of the second PPDU, but the data part of the first PPDU is different from the data part of the second PPDU. When the STA uses a joint transmission manner, and data of the STA is included in both the data part of the first PPDU and a data part of the second PPDU, the first physical layer preamble of the first PPDU is the same as the second physical layer preamble of the second PPDU.

102: The first AP sends the first PPDU, where the data part of the first PPDU includes the data of the first STA.

Correspondingly, the first station receives the first PPDU.

For example, a STA in the special BSS may use the coordinated scheduling manner, the coordinated beamforming manner, or the joint transmission manner, and data of the STA is included in the first PPDU. In this case, the first AP sends the first PPDU, where the first physical layer preamble of the first PPDU is sent omnidirectionally, and the data part is sent directionally.

103: The first STA obtains the data of the first STA by parsing the data part of the first PPDU based on the special BSS color and the signaling information.

For example, the first STA parses the first PPDU based on the signaling information included in the first physical layer preamble of the first PPDU, and finds that a BSS color carried in the first PPDU is the special BSS color. In this case, the first STA continues parsing the data part of the first PPDU based on the information, to obtain the data of the first station.

According to the PPDU sending method provided in this embodiment of this application, a special BSS is constructed based on an AP coordinated set, all APs in the AP coordinated set are used as one special AP, the AP coordinated set is used to serve a first station, and a physical layer preamble of a PPDU sent by each AP in the AP coordinated set carries a BSS color of the special BSS, and the like. In this way, when a PPDU of the special AP is sent by a first AP in the AP coordinated set, a physical layer preamble part of the PPDU sent by the first AP is the same as a physical layer preamble part of a PPDU sent by another AP, namely, a second AP, in the AP coordinated set. Therefore, a phenomenon of mutual interference between physical layer preambles can be eliminated, and a success rate of correctly receiving a PPDU by a STA can be increased. In addition, after the special BSS is introduced, STAs that originally interfere with each other may be associated with the special BSS, so that the STAs that interfere with each other are served by a same AP, namely, the special AP. Therefore, the phenomenon of mutual interference between physical layer preambles can be eliminated, and the success rate of correctly receiving a PPDU by a STA can be increased.

In a feasible design, the signaling information in the first physical layer preamble includes a signaling A (SIG-A) field and a signaling B (SIG-B) field, the SIG-A field includes transmission parameters of the first PPDU and the second PPDU, the SIG-B field includes resource allocation information that carries the data of the first STA, and the SIG-A field includes the special BSS color.

For example, because the first physical layer preamble is the same as the second physical layer preamble, and the first PPDU and the second PPDU each have a data part, when a STA uses the coordinated scheduling manner or the coordinated beamforming manner, RUs corresponding to the first PPDU and the second PPDU carry different data parts; or when a STA uses the joint transmission manner, RUs corresponding to the first PPDU and the second PPDU carry the same data part. In any coordinated transmission manner, physical layer preambles of the first PPDU and the second PPDU are completely the same, and both carry the transmission parameters of the first PPDU and the second PPDU. The transmission parameter and the special BSS color may be set in the SIG-A field. The transmission parameter includes an MCS, bandwidth indication of a quantity of data part long training fields (long training fields, LTFs) and transmission of the data part long training field, an uplink or downlink indication, a guard interval (guard interval, GI) size, an LTF size, and the like.

For example, the data part of the first PPDU may include data of at least one first station, resource allocation information that carries data of each first station may be included in the SIG-B field, and the resource allocation information is, for example, RU allocation information or spatial stream allocation information.

In the foregoing embodiment, the SIG-A field may be an extremely high throughput (extremely high throughput, EHT)-SIG-A field, the SIG-B field may be an EHT-SIG-B field, or the like.

In this embodiment, the signaling information in the first physical layer preamble includes the SIG-A field and the SIG-B field. The transmission parameters of the first PPDU and the second PPDU and the special BSS color are included in the SIG-A field, and the resource allocation information that carries the data of the first STA is included in the SIG-B field, so that physical layer preambles of the first PPDU and the first PPDU are the same. Therefore, the phenomenon of mutual interference between physical layer preambles can be eliminated, and the success rate of correctly receiving a PPDU by a STA can be increased.

In a feasible design, the SIG-A field further includes indication information, and the indication information is used to indicate whether the first PPDU is a coordinately transmitted PPDU; or the special BSS color is further used to indicate that the first PPDU is a coordinately transmitted PPDU.

For example, after receiving one PPDU, one STA needs to identify whether the PPDU is a coordinately transmitted PPDU. For example, the SIG-A field further includes one piece of indication information, and the indication information is used to indicate, to the first STA, whether the first PPDU is a coordinately transmitted PPDU. For another example, the SIG-A field may not include the indication information. After receiving the first PPDU, the first STA finds that the BSS color carried in the first PPDU is the special BSS color. In this case, the first PPDU is considered to be a coordinately transmitted PPDU.

In this embodiment, the indication information explicitly indicates whether the first PPDU is a coordinately transmitted PPDU, or the special BSS color implicitly indicates that the first PPDU is a coordinately transmitted PPDU, so as to implement an objective of indicating the coordinately transmitted PPDU to the STA.

In a feasible design, the SIG-B field further includes an AP selection field, and the AP selection field is used to indicate, to the first station, the first AP that sends the first PPDU in the AP coordinated set.

For example, the first station receives the first PPDU, where the data part of the first PPDU includes the data of the first station. For the first station, the first station needs to identify that the data of the first station is from a specific AP, or from a specific antenna cluster in the AP coordinated set. Therefore, the SIG-B field of the first physical layer preamble part needs to carry an AP selection field of each STA. For example, the AP coordinated set includes the AP 1 and the AP 2, and two bits are used to indicate that the data is from a specific AP. When the AP selection field is 01, it indicates that the data is from the AP 1; when the AP selection field is 10, it indicates that the data is from the AP 2; when the AP selection field is 11, it indicates that the data is from both the AP 1 and the AP 2.

Refer to FIG. 7 again. When the STA 0 and the STA 3 use the coordinated scheduling manner or the coordinated beamforming manner, the data part of the first PPDU includes data of the STA 0, and the data part of the second PPDU includes data of the STA 3. In this case, SIG-B fields of the first PPDU and the second PPDU simultaneously carry AP selection fields of the STA 0 and the STA 3, where the AP selection field of the STA 0 is 01, and the AP selection field of the STA 3 is 10. When the STA 0 and the STA 3 use the joint transmission manner, the data part of the first PPDU includes data of the STA 0 and the STA 3, and the data part of the second PPDU includes data of the STA 0 and the STA 3. In this case, SIG-B fields of the first PPDU and the second PPDU simultaneously carry AP selection fields of STA 0 and STA 3, where the AP selection field of the STA 0 is 11, and the AP selection field of the STA 3 is 11.

In this embodiment, the AP selection field is carried in the SIG-B field of the physical layer preamble part, to implement an objective of indicating a data source to the first STA.

In a feasible design, before sending the first PPDU, the first AP further sends a beacon (beacon) frame, where the beacon frame carries at least one of the following information: a flag bit of the special BSS and AP indication information, where the flag bit of the special BSS is used to indicate that the special BSS is established by the AP coordinated set, and the AP indication information is used to indicate an AP in the AP coordinated set.

For example, after the AP coordinated set is determined, APs in the AP coordinated set, for example, the first AP and the second AP, each broadcast a beacon frame, where the beacon frame carries at least the flag bit of the special BSS, the AP indication information, and the like. After receiving the beacon frame, a STA may determine the special BSS based on the flag bit, and determine the AP in the AP coordinated set based on the AP indication information. In addition, after the AP coordinated set is determined, the special BSS is also determined, but a STA associated with the special BSS is not determined. Therefore, after receiving a beacon frame sent by each AP in the AP coordinated set, one STA may determine, based on a signal size of each beacon frame, whether to be associated with the special BSS, that is, whether to be served as the first STA in this embodiment of this application, and be served by the AP coordinated set.

In this embodiment, the first AP broadcasts the beacon frame that carries the flag bit of the special BSS, the AP indication information, and the like, to implement a communication procedure and negotiation between the AP and the STA.

In a feasible design, before sending the first PPDU, the first AP further sends the beacon (beacon) frame, where the beacon frame carries a BSS identifier of a BSS including the AP in the AP coordinated set, and the BSS identifier is used for communication between the first AP and the second AP. The first AP receives a response frame sent by a second station included in the second AP, where the second station is associated with the first AP, and the response frame is used to indicate whether the second AP joins the AP coordinated set.

In this embodiment, there is another BSS. The BSS is used for negotiation between the primary AP and the secondary AP, and the BSS is referred to as a BSS 4 below. The BSS 4 includes all APs in the AP coordinated set, where these APs include the primary AP and the secondary AP, and each secondary AP includes a second station. For example, a station is instantiated in the secondary AP, and the station is referred to as the second station. The primary AP broadcasts a beacon frame that carries information about the BSS 4. After receiving the beacon frame that carries the information about the BSS 4, each secondary AP obtains the information related to the BSS 4 in the beacon frame.

In a feasible design, the data part of the first PPDU further includes data of a station associated with the first AP.

For example, refer to FIG. 7A and FIG. 7B again. The first station is, for example, the STA 0 or the STA 3. In other words, the STA 0 and the STA 3 are served by the AP coordinated set, to be specific, the special AP 3. The STA 1 is associated with the BSS 1, and in addition to the data of the STA 0 and the STA 3, the data part of the first PPDU further includes data of the STA 1.

In this embodiment, data of the first PPDU sent by the first AP includes data of a STA served by the AP coordinated set and data of a STA served by the first AP, so that an objective of fully utilizing a data part of a PPDU is implemented, and interaction between the first AP and the STA is reduced.

In a feasible design, before sending the first PPDU, the first AP further sends a mapping relationship between the first AP and the first station to a distributed system (DS), so that the DS sends the data of the first station to the first AP; or the first AP sends, to the second AP, at least one media access control layer service data unit (MSDU) of the first station, a traffic identifier (TID) of the at least one MSDU, and a start number of a sequence number (SN) of the TID. The TID is used to indicate a traffic type of the MSDU, and the start number of the SN is used to indicate a start SN allocated by the second AP to each MSDU.

For example, when the first AP and the second AP use the joint transmission manner, data needs to be shared first, then the first AP can obtain the data part of the first PPDU based on the shared data, and the second AP can obtain the data part of the second PPDU based on the shared data. The shared data is an MSDU required for generating a PPDU.

In a manner, each AP that participates in joint transmission and that is in the AP coordinated set sends, in advance, a mapping relationship between an AP and a STA to the distributed system (distributed system, DS). For example, refer to FIG. 7A and FIG. 7B again. If the AP 1 and the AP 2 send data to the STA 0 in the joint transmission manner, the AP 1 sends, in advance, a mapping relationship between the AP 1 and the STA 0 to the DS, and the AP 2 sends, in advance, a mapping relationship between the AP 2 and the STA 0 to the DS. Then, after data of an external network arrives at the DS, the DS finds that the data is going to be sent to the STA 0. In this case, the DS sends the data to the AP 1 and the AP 2 based on the mapping relationship, so that the AP 1 and the AP 2 generate data parts of PPDUs based on the data and send the PPDUs to the STA 0.

In another manner, after data of an external network arrives at the DS, the DS sends the data to the AP 1, and the AP 1 finds that the AP 1 and the AP 2 need to send the data to the STA 0 in the joint transmission manner. In this case, the AP 1 sends the data to the AP 2. The data is, for example, an MSDU of the STA 0. In addition, the AP 1 sends a TID of each MSDU of the STA 0, a start number of an SN of the TID, and the like to the AP 2, so that sequence numbers allocated by the AP 1 and the AP 2 to each MSDU of the STA 0 are the same, thereby ensuring that SNs sent by the AP 1 and the AP 2 are consistent during joint transmission. Then, the AP 1 and the AP 2 generate data parts of PPDUs based on the data, and send the PPDUs to the STA 0.

In this embodiment, the DS sends, to the first AP and the second AP, data that needs to be jointly transmitted, or the first AP sends, to the second AP, the data that needs to be jointly transmitted, so as to implement joint transmission.

In a feasible design, before sending the first PPDU, the first AP further sends a synchronization frame to another AP in the AP coordinated set, where the synchronization frame carries at least one of the following information: long training field (LTF) quantity information, used to indicate a quantity of LTFs in a PPDU sent by each AP in the AP coordinated set; an association identifier (Association identifier, AID) of the first station; a traffic identifier (TID) of a to-be-transmitted MSDU, where the TID is used to indicate a traffic type of the MSDU; a sequence number (sequence number, SN) of the TID, where the SN number is used to indicate a specific to-be-transmitted MSDU; no-fragmentation, used to indicate whether to fragment the MSDU; and fragment threshold indication information, used to indicate to fragment the MSDU when a length of the MSDU meets a preset condition.

For example, the primary AP sends the synchronization (Synchronization, SYNC) frame to each secondary AP, that is, the first AP sends the SYNC frame to the second AP, and the second AP waits for, after receiving the synchronization frame, an SIFS before sending the PPDU synchronously with the first AP. The synchronization frame may be a trigger (trigger) frame, a null data packet announcement (null data packet announcement, NDPA) frame, or the like. The synchronization frame carries at least one of the following information:
1. LTF quantity information, where the information is used to indicate a quantity of EHT-LTF fields in the PPDU sent by each AP in the AP coordinated set.
2. AID of a station to which the to-be-transmitted MSDU belongs.
3. Traffic identifier (traffic identifier, TID) of an MSDU of the first station, where the TID is used to indicate a traffic type of the MSDU.
4. Sequence number (sequence number, SN) of the TID, where the sequence number is used to indicate an MSDU to be transmitted by the second AP in the joint transmission mode.
5. No-fragmentation, used to indicate whether to fragment the MSDU, and the second AP may determine, based on the no-fragmentation, whether to fragment the MSDU.
6. Fragment threshold indication information, used to indicate to fragment the MSDU when a length of the MSDU meets the preset condition. For example, if the synchronization frame does not carry the no-fragmentation, but carries the fragment threshold indication information, the second AP fragments the MSDU when the length of the MSDU meets the preset condition. For another example, if the synchronization frame carries both the no-fragmentation and the fragment threshold indication information, the second AP performs fragmentation only when the no-fragmentation indicates to perform fragment and the length of the MSDU meets the preset condition.
7. AP indication information, where the AP indication information is used to indicate the first AP that sends the data of the first station in the coordinated set.

For example, an objective of sending the SYNC frame to the second AP by the first AP is to notify the second AP to use a specific parameter to send and to send a specific MSDU. For example, the SYNC frame carries the foregoing AID, TID, and SN, so as to notify the second AP of a specific STA that uses joint transmission, a TID of the STA, and an MSDU of an SN of the TID.

In this embodiment, the first AP sends the synchronization frame to the second AP, to implement an objective of coordinated transmission performed by the first AP and the second AP.

In the foregoing embodiment, that the AP coordinated set is used to serve the first STA needs to go through the following phases: Establish an AP coordinated set and select a primary AP (namely, the first AP) first, then construct a special BSS, share data, and the first AP sends a synchronization frame to the second AP. Then, the first AP cooperates with the second AP to send a PPDU. The shared data exists only when the first AP and the second AP send the PPDU in the joint transmission manner. The following separately describes these phases in detail based on FIG. 7A and FIG. 7B.

First, establish the AP coordinated set.

Refer to FIG. 7A. Initially, the AP 1 and the AP 2 respectively construct the BSS 1 and the BSS 2, the STA 0 and the STA 1 are associated with the BSS 1, and the STA 2 and the STA 3 are associated with the BSS 2. The STA 0 and the STA 3 are located in an overlapping area covered by the BSS 1 and the BSS 2. When the AP 1 finds that the STA 0 associated with the AP 1 is interfered by the BSS 2, the AP 1 sends a request frame to the AP 2 to request coordinated transmission, where a type of the request frame belongs to a public action frame (public action frame). After receiving the request frame, the AP 2 returns a coordination response frame to the AP 1. The AP 1 determines the AP coordinated set and the primary AP based on the coordination response frame. During implementation, that the AP coordinated set and the primary AP are determined by a specific AP may be flexibly set. This is not limited in this embodiment of this application. The primary AP meets at least the condition that the primary AP is within communication ranges of all secondary APs on air interfaces. Unless otherwise specified below, the AP 1 is used as the primary AP, namely, the first AP, the AP 2 is used as the secondary AP, and the AP coordinated set includes the AP 1 and the AP 2.

Second, construct the special BSS.

In this embodiment of this application, all APs in the AP coordinated set are taken as a whole by default, that is, the AP 3, the AP 3 has a special MAC address, and the special MAC address is different from a MAC address of the AP 1 and a MAC address of the AP 2. The AP 3 constructs a special BSS, namely, the BSS 3, for coordinated transmission. In addition, in another feasible implementation, some APs in the AP coordinated set may be taken as a whole to obtain an AP of the special BSS, that is, the AP 3. This is not limited in this embodiment of this application.

In this embodiment of this application, a first station in the special BSS 3 may be obtained in the following manner: The AP 1 and the AP 2 broadcast a beacon that carries the flag bit of the special BSS and the AP indication information, and a STA determines, based on signal strength and the like of the received beacon of each AP, to be associated with a specific BSS. The beacon of each AP carries one extended information element (information element, IE) of multiple basic service set identifiers (Multiple basic service set identifiers, Multiple BSSIDs), and the extended multiple BSSID IE carries the flag bit of the special BSS and the coordinated AP indication information. The flag bit of the special BSS is used to indicate that the BSS is a BSS used for coordinated transmission, and the AP indication information is used to indicate an AP participating in coordination, for example, an ID or a MAC address of the AP participating in coordination. The beacon may further carry a BSS color of the BSS 3, and the like. The STA 0 is used as an example. A location of the STA 0 can receive both a beacon of the AP 1 and a beacon of the AP 2, and the beacon of the AP 1 carries BSS information of the BSS 1 and BSS information of the BSS 3. In this case, the STA 0 may choose to be associated with the BSS 3 to avoid interference from a neighboring BSS.

In the foregoing manner, the STA 0 determines, based on a signal size of a beacon of each AP, according to an algorithm, and the like, to be associated with a specific BSS. However, this embodiment of this application is not limited. In another feasible implementation, the AP 1 may alternatively determine whether to associate the STA 0 with the BSS 3. For the STA 4, because no AP in the AP coordinated set serves the STA 4, after receiving the beacon of each AP, the STA 4 independently determines to be associated with a specific BSS of the BSS 1, the BSS 2, and the BSS 3.

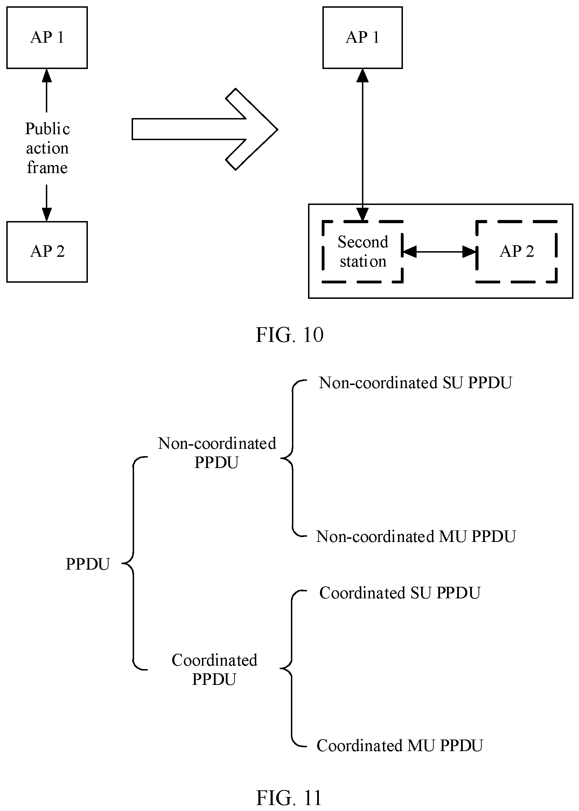

After the special BSS 3 is constructed, to be specific, after the AP 3 and each first STA that are included in the special BSS are determined, the AP 1 (primary AP) and the AP 2 (secondary AP) in the AP coordinated set need to exchange related information of the BSS 3. For example, FIG. 10 is a schematic diagram of communication between APs in a PPDU sending method according to an embodiment of this application.

Refer to FIG. 10. In a phase of establishing an AP coordinated set, an AP 1 and an AP 2 negotiate the AP coordinated set and a primary AP by using a public action frame. After it is determined that the primary AP and the AP coordinated set are established, a second STA is instantiated in the AP 2, and the second STA is associated with the AP 1, to obtain a BSS including an AP. The BSS including the AP is, for example, a BSS 4, and the BSS 4 has a BSS color of the BSS 4, and the like. After receiving a beacon frame sent by the AP 1, the second STA directly forwards the beacon frame to the AP 2, so that logical bridging is established between the second STA and the AP 2. The beacon carries an extended multiple BSSID IE to indicate related information of the BSS 4. A parameter of the BSS 4 is used for communication between the AP 1 and the AP 2.

In addition, when the AP 1 communicates with the AP 2 by using a BSSID of the BSS 4, if the AP 1 and the AP 2 use a coordinated beamforming manner, in a communication process between the AP 1 and the AP 2, the AP 1 may further indicate a specific coordinated AP that needs to perform interference nulling (nulling), or may not indicate the coordinated AP, but specify that all non-serving APs need to perform nulling, or may further specify that the non-serving AP independently determines, based on channel state information (channel state information, CSI), whether to perform nulling. For one STA, an AP that serves the STA is referred to as a serving AP, and another AP in the AP coordinated set except the serving AP is referred to as a non-serving AP.

After a special BSS is constructed, a BSS color in a PPDU needs to be set in either of the following cases:
Case 1: One PPDU is prohibited from carrying MPDUs of a plurality of BSSs.

In this case, when a PPDU sent by the AP 1 includes only data of a STA related to a BSS 1, a BSS color of the PPDU is set to a BSS color 1. When a PPDU sent by the AP 1 includes only data of a STA related to a BSS 3, a BSS color of the PPDU is set to a BSS color 3, that is, set to a special BSS color. For example, refer to FIG. 7A and FIG. 7B again. After the special BSS 3 is constructed, the STA 0 and the STA 3 are associated with the BSS 3, the STA 1 is associated with the BSS 1, and the STA 2 is associated with the BSS 2. When a data part of the PPDU sent by the AP 1 includes only data associated with the BSS 1, the BSS color of the PPDU is set to the BSS color 1. When a data part of the PPDU sent by the AP 1 includes only data of the STA 0 and the STA 3 that are associated with the BSS 3, the BSS color of the PPDU is set to the BSS color 3.

For a STA, because data packets of the plurality of BSSs are prohibited from being transmitted in a same PPDU, after receiving the PPDU, the STA determines whether a BSS color carried in the PPDU is the same as a BSS color of a BSS in which the STA is located. If the BSS colors are the same, the STA parses the PPDU; or if the BSS colors are different, the STA does not need to parse the PPDU. In this case, association identifier (association identifier, AID) space among different BSSs, that is, among the BSS 1, the BSS 2, and the BSS 3, may be repeated.

Case 2: A PPDU of an AP 3 is allowed to carry an MPDU of a BSS 1 or a BSS 2, but a PPDU of the AP 1 is not allowed to carry an MPDU of a BSS 3. Similarly, a PPDU of the AP 2 is not allowed to carry the MPDU of the BSS 3 either.

In this case, when the AP 1 is used as the primary AP in the AP coordinated set, and the AP coordinated set serves a first STA, a PPDU in a transmission opportunity (transmission opportunity, TXOP) of the AP 1 may carry the MPDU of the BSS 3. Similarly, the PPDU may further carry the MPDU of the BSS 1 or the BSS 2. However, when the AP 1 is used as an AP of the BSS 1, the PPDU in the TXOP of the AP 1 can carry only the MPDU of the BSS 1. Similarly, when the AP 2 is used as an AP of the BSS 2, a PPDU in a TXOP of the AP 2 can carry only the MPDU of the BSS 2. For example, refer to FIG. 7A and FIG. 7B again. After the STA 0 switches from the BSS 1 to the BSS 3, and the STA 3 switches from the BSS 2 to the BSS 3, the AP coordinated set serves the STA 0 and the STA 3 that are in the BSS 3. For a PPDU in a TXOP of the BSS 3, the PPDU may include MPDUs for STAs in the BSS 1, the BSS 2, and the BSS 3. For a PPDU in a TXOP of the BSS 1, the PPDU includes only an MPDU for the STA 1. For a PPDU in a TXOP of the BSS 2, the PPDU can include only an MPDU for the STA 2.

For the STA 1 in the BSS 1, after receiving a PPDU, and when a BSS color in the PPDU is the BSS color 1 or the BSS color 3, the STA 1 needs to continue to parse the PPDU.

Usually, from a perspective of whether coordinated transmission is performed, PPDUs sent by APs may be classified into a coordinated PPDU and a non-coordinated PPDU. From a perspective of whether a carried data part of a PPDU includes an MPDU for a single STA or includes MPDUs for a plurality of STAs, PPDUs may be further classified into a single-user (single-user, SU) PPDU and an MU PPDU. For example, FIG. 11 is a schematic diagram of format classification of a PPDU in a PPDU sending method according to an embodiment of this application. Refer to FIG. 11. PPDUs include a coordinated PPDU and a non-coordinated PPDU, non-coordinated PPDUs include a non-coordinated SU PPDU and a non-coordinated MU PPDU, and coordinated PPDUs include a coordinated SU PPDU and a coordinated MU PPDU. It is clearly that, the PPDU in this embodiment of this application, for example, a first PPDU or a second PPDU, mainly refers to the coordinated MU PPDU. For an MU PPDU, because one PPDU includes MSDUs of a plurality of STAs, and a plurality of APs send the PPDU in a coordinated transmission manner, a field needs to be added to the PPDU, to indicate, to the STA, that data of the STA is from a specific antenna cluster, that is, sent from a specific AP. The field is denoted as an AP selection (AP_SELECTION) field.

In a manner, a bitmap (bitmap) of a coordinated AP may be used to perform the foregoing indication. A sequence of APs in the bitmap is consistent with a sequence of coordinated APs indicated by AP indication information, and the AP indication information is AP indication information carried in a beacon frame broadcast by a first AP in an AP coordinated set. For an SU PPDU, the AP selection field is carried in a SIG-A field, and for the MU PPDU, the AP selection field is carried in a SIG-B field. For example, refer to FIG. 7A and FIG. 7B again. The AP 1 and the AP 2 form an AP coordinated set {AP 1, AP 2}. For joint transmission, an AP_SELECTION field of a corresponding STA is set to 11. For non-joint transmission, an AP_SELECTION field of a corresponding STA is set to 01. It indicates that data is sent from the AP 1. If AP_SELECTION = 10, it indicates that data is sent from the AP 2. When the AP 1 sends the first PPDU, a BSS color of the first PPDU is a BSS color of the BSS 3. Assuming that the first PPDU carries data of the STA 0, the STA 3, and the STA 1, a BSS color of the second PPDU sent by the AP 2 is the BSS color of the BSS 3. Assuming that the second PPDU carries data of the STA 2 and the STA 3, a SIG-B field of the first PPDU simultaneously carries AP selection fields of the STA 0, the STA 1, the STA 2, and the STA 3. In a non-joint transmission manner, that is, in a coordinated scheduling manner or a coordinated beamforming manner, when one RU is allocated to a plurality of STAs, interference between a plurality of users may be reduced or avoided by using power control or the like based on a BSS to which the STA belongs.

Next, share the data.

For example, when the first AP and the second AP send data in the joint transmission manner, the first AP and the second AP need to share an MSDU of a STA that uses joint transmission. Then, the first AP and the second AP can generate an MPDU by using the shared MSDU, and further encapsulate the MPDU into a PPDU. Manners of sharing the MSDU are as follows:
Manner 1: Perform sharing by using a MAC address list.

In this manner, when an associated STA needs to use joint transmission, an AP of a BSS associated with the STA sends control information to the distributed system (distributed system, DS), where the control information includes a MAC address of a STA that needs to use joint transmission, and a MAC address list of APs that perform joint transmission. After receiving the control information, the DS sends, based on the MAC address list, data of the STA to APs corresponding to all MAC addresses in the MAC address list. Alternatively, the DS allocates a multicast address, and the multicast address is referred to as the MAC address list. For example, refer to FIG. 7A and FIG. 7B again. When the STA 0 needs to use joint transmission, the AP 1 sends control information to the DS, where the control information includes a MAC address of the STA 0 and a MAC address list of APs, and the MAC address list includes MAC addresses of the AP 1 and the AP 2. After receiving the control information, when data of the STA 0 arrives, the DS sends the data to the AP 1 and the AP 2 based on the MAC address list.

In addition, an SN start number of each TID of the STA that needs to use joint transmission is notified, through a backhaul (backhaul) link or an air interface, by the STA to the APs that perform joint transmission. Alternatively, an SN start number of each TID of the STA that needs to use joint transmission is notified, through a backhaul (backhaul) link or an air interface, by the primary AP in the AP coordinated set to APs that perform joint transmission.

Manner 2: Share data by using a mapping relationship between an AP and a STA.

In this manner, when an associated STA needs to use joint transmission, all APs in the AP coordinated set each send a message to the DS, to indicate the mapping relationship between the AP and the STA to the DS. The DS routes a corresponding data packet based on the message. The message includes the following information: a MAC address of the STA and a type of an action of deleting (deleting) or adding (adding). For example, the AP coordinated set includes the AP 1, the AP 2, the AP 3, and the AP 4, and the DS stores a mapping relationship between the AP 4 and the STA 1. When joint transmission needs to be performed, the message sent by the AP 1 to the DS indicates a mapping relationship between the AP 1 and the STA 1, the message sent by the AP 2 indicates a mapping relationship between the AP 2 and the STA 1, the message sent by the AP 3 indicates a mapping relationship between the AP 3 and the STA 1, and the message sent by the AP 4 indicates that the mapping relationship between the AP 4 and the STA 1 is deleted. In this case, the DS sends a data packet of the STA 1 to the AP 1, the AP 2, and the AP 3.

Manner 3: An associated AP or a primary AP sends, to another coordinated AP, an MSDU of a STA that needs to use joint transmission. For example, the AP coordinated set includes the AP 1, the AP 2, the AP 3, and the AP 4, the AP 1 is the primary AP, and the STA 2 is associated with the BSS 2. When the STA 2 needs to use joint transmission, the AP 1 sends an MSDU of the STA 2 to the AP 2, the AP 3, and the AP 4 through a backhaul or an air interface, or the AP 2 sends the MSDU of the STA 2 to the AP 1, the AP 3, and the AP 4 through the backhaul or the air interface. In addition to sending the MSDU, the primary AP or the associated AP further sends an SN start number of each TID of the STA 2.

Then, the first AP sends the synchronization frame to the second AP.

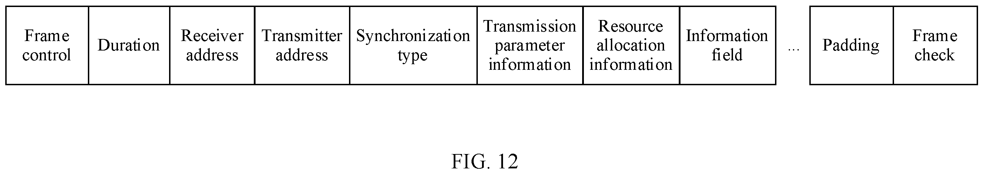

For example, when a PPDU is sent in the multi-AP coordinated transmission manner, a plurality of APs participating in coordinated transmission include a primary AP and at least one secondary AP. The primary AP sends the SYNC frame to each secondary AP. The secondary AP waits for, after receiving the SYNC frame, an SIFS before sending the PPDU synchronously with the primary AP. It can be learned that the SYNC frame is a frame used by the primary AP to trigger coordinated transmission with the secondary AP, and the SYNC frame may be a trigger frame, an NDPA frame, a data frame, or the like. In addition to this basic function, the SYNC frame may further be used to carry some delay-sensitive information, for example, a transmission parameter and resource allocation information of a to-be-transmitted PPDU. The following describes in detail the SYNC frame sent by the first AP to the second AP when the PPDU is an EHT PPDU. For example, FIG. 12 is a schematic diagram of a SYNC frame in a PPDU sending method according to an embodiment of this application.

Refer to FIG. 12. The SYNC frame includes:
A. a frame control (frame control) field, carrying MAC frame control information;
B. a duration (duration) field, used to calculate frame duration;
C. a receiver address (receiver address, RA) field, used to record a destination address of the SYNC frame;
D. a transmitter address (transmitter address, TA) field, used to record a source address of the SYNC frame;
E. a synchronization type (SYNC Type), used to indicate a specific frame, for example, a trigger frame, an NDPA frame, or a data frame, to be simultaneously sent by all coordinated APs after the primary AP sends the SYNC frame; and
F. transmission parameter information (Tx parameter information), including at least the following content:

a. EHT-LTF quantity information, used to indicate a quantity of EHT-LTFs that need to be carried in one PPDU. The quantity of EHT-LTFs is related to a case of the PPDU.

In a first case, one PPDU has only one coordination mode, all STAs have a same coordination mode, and values of AP selection fields of all STAs are also the same. In this case,
for a coordinated scheduling manner, the quantity of EHT-LTFs is equal to a maximum quantity of total quantities of streams scheduled in all coordinated BSSs, that is, the quantity of EHT-LTFs = max(total quantity of streams in the BSS 1, total quantity of streams in the BSS 2);
for a coordinated beamforming manner, the quantity of EHT-LTFs is equal to a maximum quantity of total quantities of streams scheduled in all coordinated BSSs, that is, the quantity of EHT-LTFs = max(total quantity of streams in the BSS 1, total quantity of streams in the BSS 2), or the quantity of EHT-LTFs = the total quantity of streams in the BSS 1 + the total quantity of streams in the BSS 2;
for a joint transmission manner, the quantity of EHT-LTFs is equal to a sum of quantities of streams in all coordinated BSSs, that is, the quantity of EHT-LTFs is equal to a total quantity of streams in the BSS 1 and a total quantity of streams in the BSS 2.

In a second case, a PPDU has different collaboration modes on different RUs.

In this case, the quantity of EHT-LTFs is equal to a maximum quantity of quantities of required EHT-LTFs in all coordination modes.
b. Guard interval (guard interval, GI) length and subcarrier spacing, which are used to indicate a GI length and a subcarrier spacing that are used by the PPDU. For example, the subcarrier spacing is 1x, 2x, or 4x.
c. Bandwidth (bandwidth) information of the PPDU.
d. Uplink or downlink indication, used to indicate whether downlink coordinated transmission or uplink coordinated transmission is performed.
e. Whether spatial reuse (spatial reuse) is allowed. A field indicating whether spatial reuse is allowed may be directly carried, or spatial reuse for coordinated transmission may be completely prohibited.
f. Block acknowledgement (block acknowledgement, BA) BA feedback manner, used to indicate a BA feedback manner.

G. Resource allocation information, used to indicate a resource allocated to the PPDU, where the resource includes an RU, a spatial stream (spatial stream, SS), and the like. The indication may be performed in the following two manners:
Manner 1: Perform the indication based on a STA. In this case, for one STA, the resource allocation information includes at least:
   a. an AID of the STA, used to indicate an AID allocated to the STA;
   b. RU allocation indication information, used to indicate an RU allocated to the STA;
   c. a streaming allocation indication, used to indicate a stream space allocated to the STA;
   d. an MCS, used to indicate an MCS of data of the STA;
   e. a TID and a start number of an SN, where the TID is used to indicate a traffic type of an MSDU of the STA, and the start number of the SN is used to indicate an SN allocated by the secondary AP to each MSDU;
   f. No-fragmentation, used to indicate whether to fragment the MSDU;
   g. fragment threshold indication information, used to indicate to fragment the MSDU when a length of the MSDU meets a preset condition, where
   e, f, and g exist only when APs in the AP coordinated set use the joint transmission manner; and
   h. an AP selection field, used to indicate that data of the STA is from a specific AP, so that each AP learns how to send an MPDU for a corresponding STA. The field exists only when each AP in the AP coordinated set uses the coordinated beamforming manner. In addition, the AP selection field may also be notified to the STA when a special BSS is constructed.
Manner 2: Perform the indication based on an RU. In this case, for one RU, the resource allocation information includes at least:
   a. an RU index (index);
   b. information about the STA 1; and
   c. information about the STA 2.

H. Information field, referred to an information field carried in a dependent frame type.

I. Padding (padding) field, used to indicate a length to which padding needs to be added.

J. Frame check sequence (frame check sequence, FCS) field, used to check whether frame decoding is correct.

Finally, the first AP cooperates with the second AP to send the PPDU.

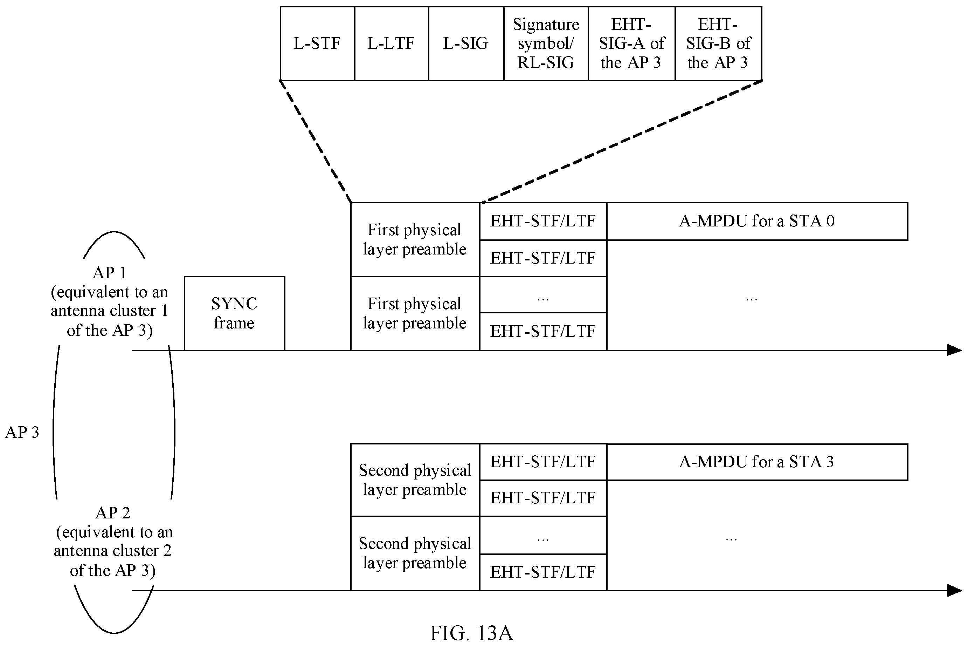

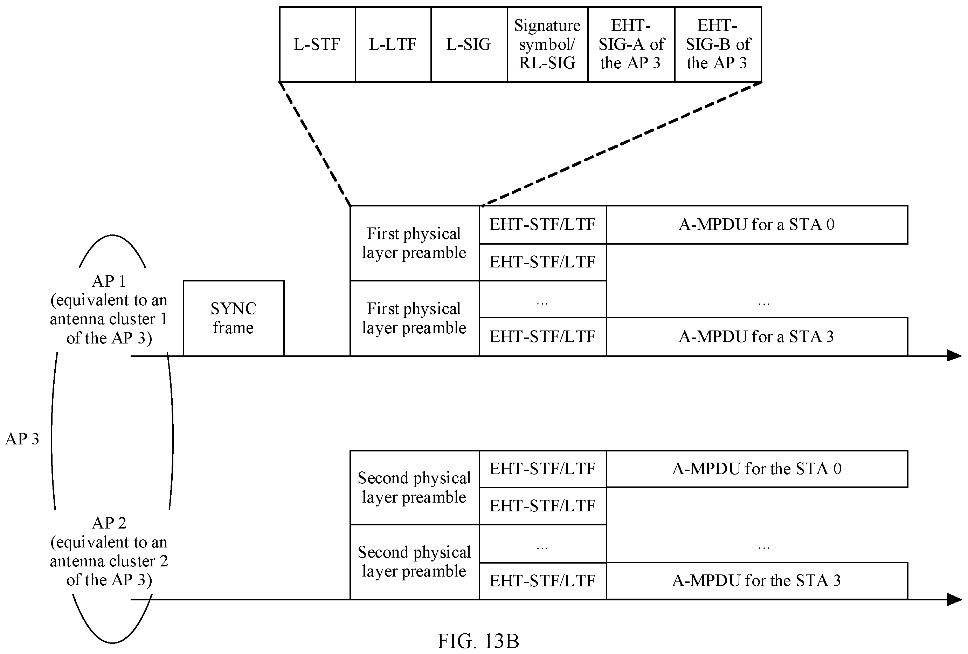

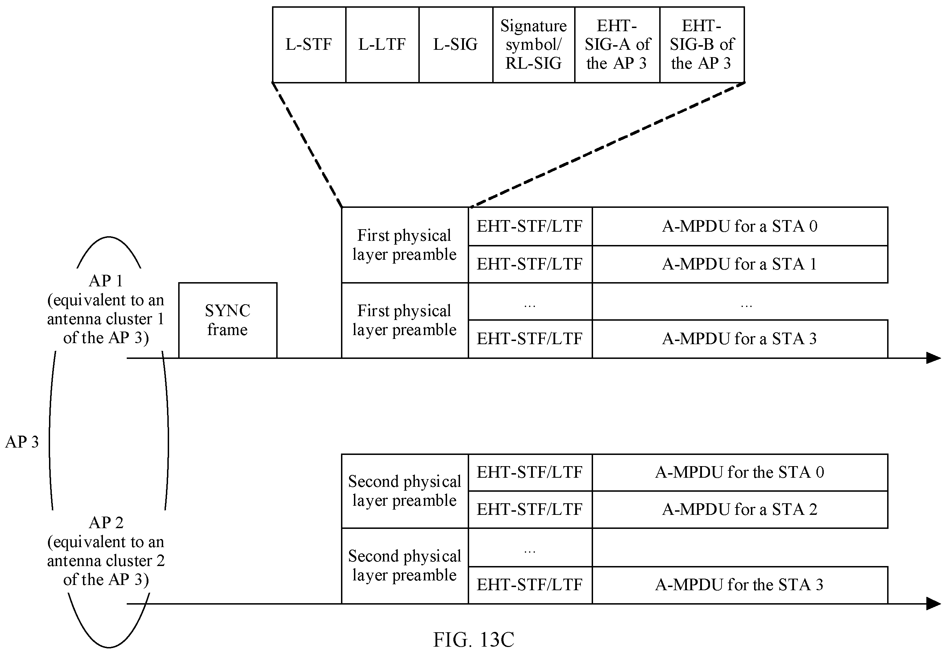

For example, refer to FIG. 13A. FIG. 13A is a schematic diagram of sending a PPDU according to an embodiment of this application. Refer to FIG. 7A and FIG. 13. The AP 1 and the AP 2 form an AP coordinated set, the AP coordinated set corresponds to the special AP 3, and the AP 3 serves the STA 0 and the STA 3. The AP 1 is equivalent to an antenna cluster 1 of the AP 3, and the AP 2 is equivalent to an antenna cluster 2 of the AP 3. The AP 1 is the primary AP, the AP 2 is the secondary AP, and two bits are used to indicate that data is from a specific AP. When an AP selection field is 01, it indicates that the data is from the AP 1; when the AP selection field is 10, it indicates that the data is from the AP 2; when the AP selection field is 11, it indicates that the data is from both the AP 1 and the AP 2.

The AP 1 sends a SYNC frame to the AP 2, and after a specific time interval, the AP 1 and the AP 2 synchronously send PPDUs. A first physical layer preamble of a first PPDU sent by the AP 1 and a second physical layer preamble of a second PPDU sent by the AP 2 are the same, and both include an L-STF, an L-STF, an L-SIG field, an RL-SIG field/a signature symbol (signature symbol), an EHT-SIG-A field of the AP 3, and an EHT-SIG-B field of the AP 3. When the STA 0 and the STA 3 use a coordinated beamforming manner or a coordinated scheduling manner, an AP selection field of the STA 0 is 01, and an AP selection field of the STA 3 is 10, a data part of the first PPDU includes an A-MPDU for the STA 0, and a data part of the second PPDU includes at least an A-MPDU for the STA 3.

FIG. 13B is another schematic diagram of sending a PPDU according to an embodiment of this application. Refer to FIG. 7A and FIG. 13B. When the STA 0 and the STA 3 use a joint transmission manner, an AP selection field of the STA 0 is 11, and an AP selection field of the STA 3 is 11, a data part of a first PPDU includes an A-MPDU for the STA 0 and an A-MPDU for the STA 1, and a data part of a second PPDU includes at least the A-MPDU for the STA 0 and the A-MPDU for the STA 3.

In FIG. 13A and FIG. 13B, the data parts of the first PPDU and the second PPDU include only data of a STA associated with a BSS 3. However, this embodiment of this application is not limited thereto. In another feasible implementation, the data part of the first PPDU includes the A-MPDUs for the STA 0, the STA 1, and the STA 3, and the data part of the second PPDU includes the A-MPDUs for the STA 0, the STA 2, and the STA 3. For example, FIG. 13C is still another schematic diagram of sending a PPDU according to an embodiment of this application. In FIG. 13C, when a STA 0 and a STA 3 use a joint transmission manner, a STA 1 and a STA 2 use a coordinated beamforming manner or a coordinated scheduling manner, AP selection fields of the STA 0 and the STA 3 are both 11, an AP selection field of the STA 1 is 01, and an AP selection field of the STA 2 is 10, a data part of a first PPDU includes an A-MPDU for the STA 0, the STA 1, or the STA3, and a data part of a second PPDU includes an A-MPDU for the STA 0, the STA 2, or the STA 3.

In addition, in the foregoing embodiment, in addition to an A-MPDU for one STA, the STA further includes an EHT-STF, an EHT-LTF, and the like. The A-MPDU includes a plurality of MPDUs, one MPDU includes a plurality of A-MSDUs, and one A-MSDU includes a plurality of MSDUs.

### Embodiment 2

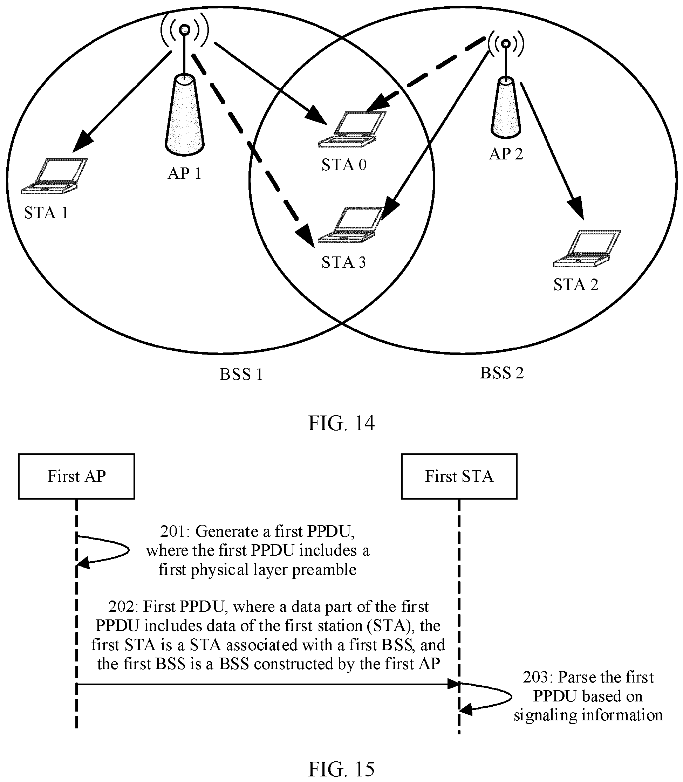

FIG. 14 is a schematic diagram of another network architecture to which a PPDU sending method according to an embodiment of this application is applicable. Refer to FIG. 14. There are at least an AP 1 and an AP 2 in the network architecture. The AP 1 and the AP 2 respectively construct a BSS 1 and a BSS 2, the AP 1, a STA 0, and a STA 1 form the BSS 1, and the AP 2, a STA 2, and a STA 3 form the BSS 2. The STA 0 and the STA3 are located in an overlapping area between the BSS 1 and the BSS 2, and the AP 1 and the AP 2 are cooperated APs, and form an AP coordinated set. In the architecture, BSS colors of different BSSs are different. A BSS color of the BSS 1 is a BSS color 1, and a BSS color of the BSS 2 is a BSS color 2.

The following describes in detail the PPDU sending method in the embodiments of this application based on the architecture shown in FIG. 14. For example, FIG. 15 is a flowchart of a PPDU sending method according to an embodiment of this application. In this embodiment, the PPDU sending method is described in detail from a perspective of interaction between a first AP and a first STA. This embodiment includes the following steps.

201: The first access point (AP) generates a first PPDU, where the first PPDU includes a first physical layer preamble.

The first physical layer preamble is the same as a second physical layer preamble, the second physical layer preamble is included in a second PPDU, the second PPDU is generated by a second AP, and the first AP and the second AP are included in a same AP coordinated set; and the first physical layer preamble includes signaling information used to parse the first PPDU, and the signaling information includes a signaling A (SIG-A) field of at least one AP, a signaling B (SIG-B) field of the first AP, and a signaling B (SIG-B) field of the second AP.

For example, refer to FIG. 14. When the AP 1 and the AP 2 use a coordinated scheduling manner or a coordinated beamforming manner, the first physical layer preamble includes a SIG-A field of at least one of the AP 1 and the AP 2, a SIG-B field of the AP 1, and a SIG-B field of the AP 2.

202: The first AP sends the first PPDU, where a data part of the first PPDU includes data of the first station (STA), the first STA is a STA associated with a first BSS, and the first BSS is a BSS constructed by the first AP.

Correspondingly, the first station receives the first PPDU. The first physical layer preamble of the first PPDU is sent omnidirectionally, and the data part is sent directionally.

203: The first STA parses the first PPDU based on the signaling information.

According to the PPDU sending method provided in this embodiment of this application, when the first AP and the second AP perform coordinated transmission, the first physical layer preamble of the first AP is the same as the second physical layer preamble of the second AP. Therefore, a phenomenon of mutual interference between physical layer preambles can be eliminated, and a success rate of correctly receiving a PPDU by a STA can be increased.

In a feasible design, the signaling A (SIG-A) field of the at least one AP includes a SIG-A field of the first AP and a SIG-A field of the second AP. The SIG-A field of the first AP, the SIG-A field of the second AP, the SIG-B field of the first AP, and the SIG-B field of the second AP are sequentially arranged.

For example, the first physical layer preamble includes SIG-A fields and SIG-B fields of all APs in the AP coordinated set, one SIG-A field includes a plurality of subfields, and one SIG-B field includes a plurality of subfields. The SIG-A field is used as an example. The SIG-A field includes a subfield a, a subfield b, and a subfield c. In this case, subfields of the SIG-A field of the first AP and subfields of the SIG-A field of the second AP are sequentially arranged. For example, refer to FIG. 14 again. The first physical layer preamble includes a SIG-A field of the AP 1, a SIG-A field of the AP 2, the SIG-B field of the AP 1, and the SIG-B field of the AP 2. Assuming that the SIG-A field of the AP 1 includes a field a, a subfield b, and a subfield c, and the SIG-A field of the AP 2 also includes a subfield a, a subfield b, and a subfield c, in the first physical layer preamble, the subfield a, the subfield b, and the subfield c of SIG-A field of the AP 1 are sequentially arranged first, and then the subfield a, the subfield b, and the subfield c of the SIG-A field of the AP 2 are sequentially arranged.

In this embodiment, the first physical layer preamble includes SIG-A fields and SIG-B fields of all APs in the AP coordinated set, so that physical layer preambles of the first PPDU and the second PPDU are the same. Therefore, the phenomenon of mutual interference between physical layer preambles can be eliminated, and the success rate of correctly receiving a PPDU by a STA can be increased.

In a feasible design, the signaling A (SIG-A) field of the at least one AP includes the SIG-A field of the first AP and the SIG-A field of the second AP. The subfields of the SIG-A field of the first AP and the subfields of the SIG-A field of the second AP are interleaved, and subfields of the SIG-B field of the first AP and subfields of the SIG-B field of the second AP are interleaved.

For example, the first physical layer preamble includes SIG-A fields and SIG-B fields of all APs in the AP coordinated set, one SIG-A field includes a plurality of subfields, and one SIG-B field includes a plurality of subfields. The SIG-A field is used as an example. The SIG-A field includes a subfield a, a subfield b, and a subfield c. In this case, the subfields of the SIG-A field of the first AP and the subfields of the SIG-A field of the second AP are interleaved. For example, refer to FIG. 14 again. The first physical layer preamble includes a SIG-A field of the AP 1, a SIG-A field of the AP 2, the SIG-B field of the AP 1, and the SIG-B field of the AP 2. Assuming that the SIG-A field of the AP 1 includes a field a, a subfield b, and a subfield c, and the SIG-A field of the AP 2 also includes a subfield a, a subfield b, and a subfield c, a sequence in the first physical layer preamble is as follows: the subfield a of the SIG-A field of the AP 1, the subfield a of the SIG-A field of the AP 2, the subfield b of the SIG-A field of the AP 1, the subfield b of the SIG-A field of the AP 2, the subfield c of the SIG-A field of the AP 1, and the subfield c of the SIG-B field of the AP 2.

In this embodiment, the first physical layer preamble includes SIG-A fields and SIG-B fields of all APs in the AP coordinated set, so that physical layer preambles of the first PPDU and the second PPDU are the same. Therefore, the phenomenon of mutual interference between physical layer preambles can be eliminated, and the success rate of correctly receiving a PPDU by a STA can be increased.

In a feasible design, the signaling A (SIG-A) field of the at least one AP includes the SIG-A field of the first AP.

For example, the first AP and the second AP share the SIG-A field of the first AP. For example, refer to FIG. 14 again. The first physical layer preamble includes a SIG-A field of the AP 1, the SIG-B field of the AP 1, and the SIG-B field of the AP 2. In this case, the AP 2 shares the SIG-A field of the AP 1.

In this embodiment, the first AP and the second AP share the SIG-A field of the first AP, so that physical layer preambles of the first PPDU and the second PPDU are the same. Therefore, the phenomenon of mutual interference between physical layer preambles can be eliminated, and the success rate of correctly receiving a PPDU by a STA can be increased.

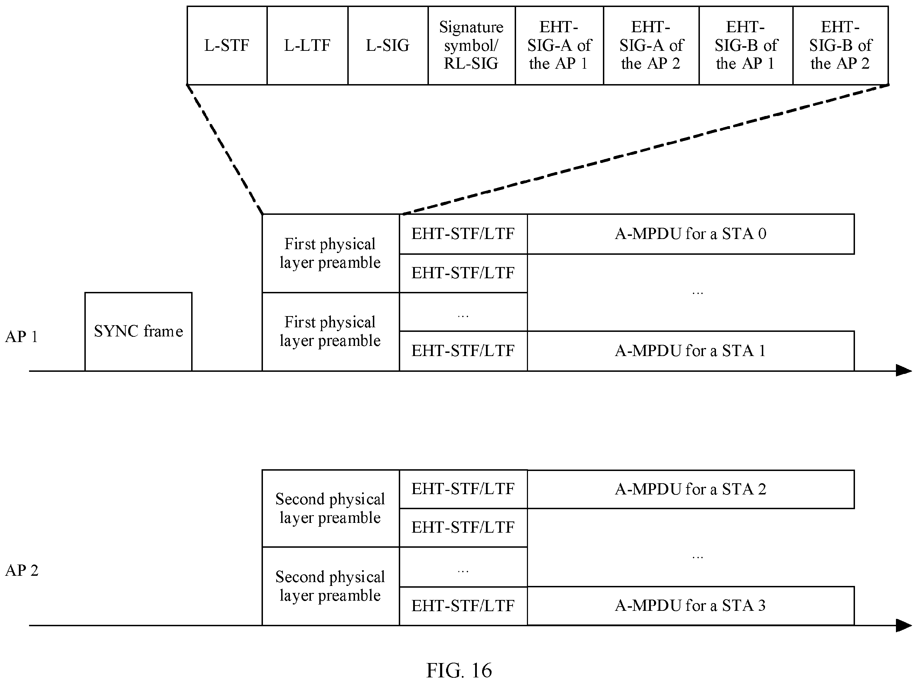

The following describes in detail the PPDU sending method by using an example in which a PPDU is an EHT PPDU. For example, refer to FIG. 16 to FIG. 19.

FIG. 16 is another schematic diagram of sending a PPDU according to an embodiment of this application. Refer to FIG. 14 and FIG. 16. The AP 1 and the AP 2 form an AP coordinated set, the AP 1 is a primary AP. The AP 1 sends a SYNC frame to the AP 2, and after a specific time interval, the AP 1 and the AP 2 synchronously send PPDUs. A first physical layer preamble of a first PPDU sent by the AP 1 and a second physical layer preamble of a second PPDU sent by the AP 2 are the same, and both include an L-STF, an L-STF, an L-SIG field, an RL-SIG field/a signature symbol (signature symbol), an EHT-SIG-A field of the AP 1, an EHT-SIG-A field of the AP 2, an EHT-SIG-B field of the AP 1, and an EHT-SIG-B field of the AP 2. The EHT-SIG-A field of the AP 1 is used to indicate a related parameter of the first PPDU, and the EHT-SIG-B field of the AP 1 is used to indicate RU allocation information and spatial stream allocation information. The EHT-SIG-A field of the AP 1 carries the BSS color 1 of the BSS 1 and length information of the EHT-SIG-B field of the AP 1, where the length information is, for example, a quantity of OFDMs.

An MPDU in a data part of the first PPDU includes an MPDU for the STA 0 and/or an MPDU for the STA 1, and an MPDU in a data part of the second PPDU includes an MPDU for the STA 2 and/or an MPDU for the STA 3.

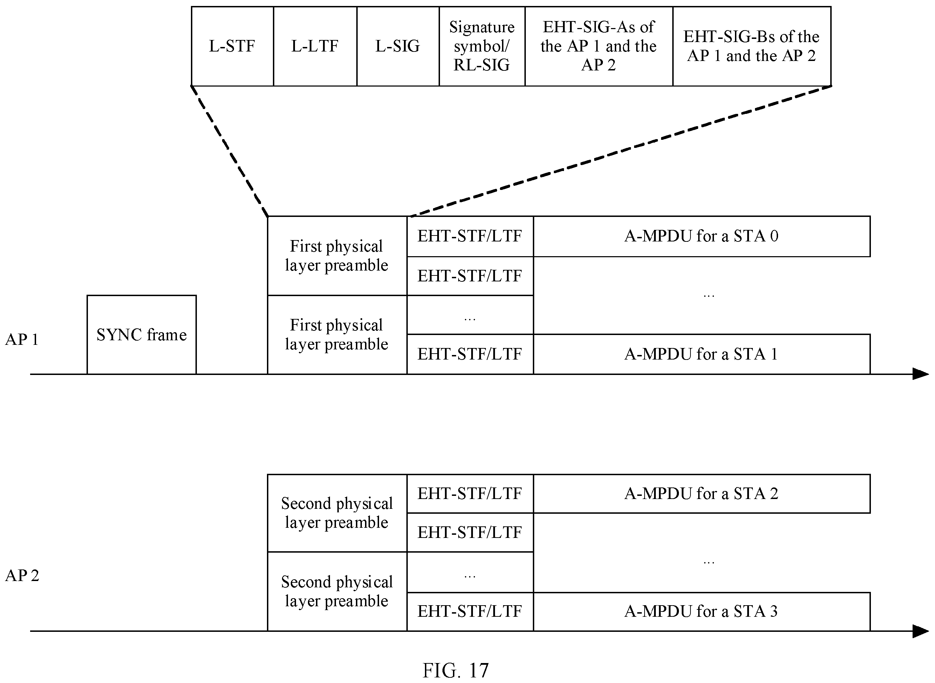

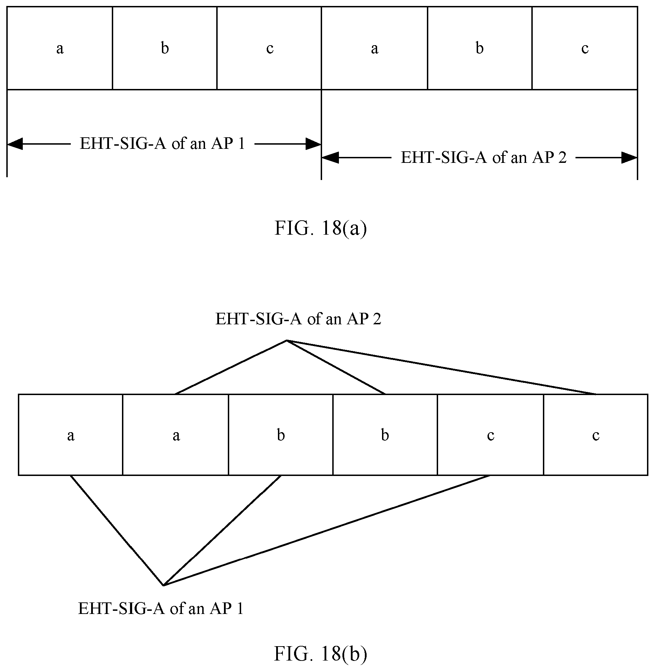

FIG. 17 is still another schematic diagram of sending a PPDU according to an embodiment of this application. In this embodiment, subfields of a SIG-A field of a first AP and subfields of a SIG-A field of a second AP are interleaved, and subfields of a SIG-B field of the first AP and subfields of a SIG-B field of the second AP are interleaved. For example, FIG. 18(a) and FIG. 18(b) are a schematic diagram of arrangement of the subfields of the SIG-A field and the subfields of the SIG-B field in FIG. 16 and FIG. 17.

Refer to FIG. 18(a) and FIG. 18(b). For FIG. 16, as shown in FIG. 18(a), subfields of the SIG-A field of the AP 1 and subfields of the SIG-A field of the AP 2 are sequentially arranged. For FIG. 17, as shown in FIG. 18 (b), subfields of the SIG-A field of the AP 1 and subfields of the SIG-A field of the AP 2 are interleaved. For descriptions of the EHT-SIG-B field of the AP 1 and the EHT-SIG-B field of the AP 2, refer to descriptions of the EHT-SIG-A fields. Details are not described herein again.

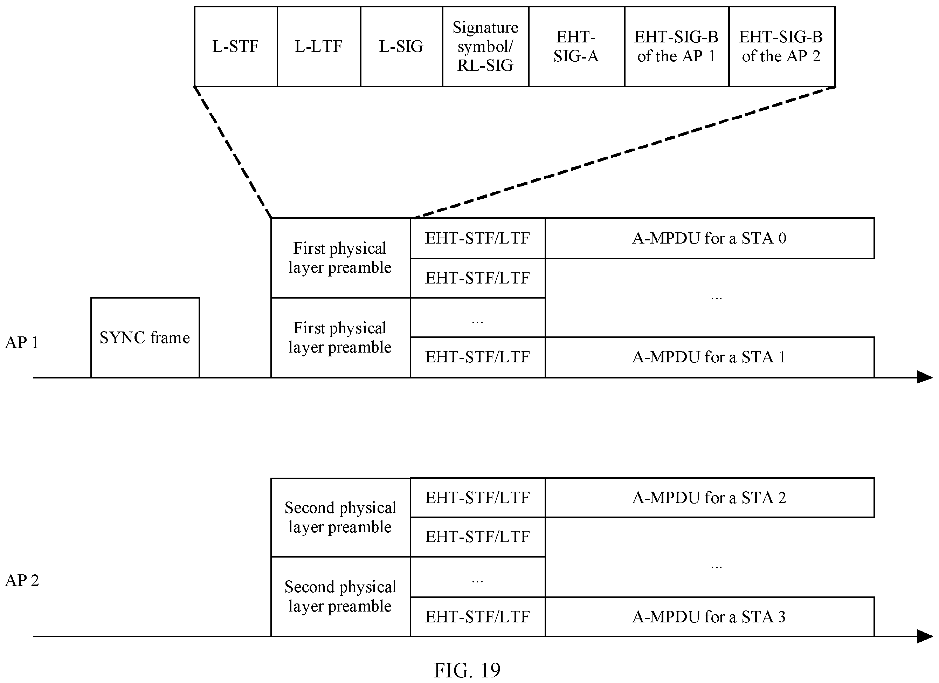

FIG. 19 is still another schematic diagram of sending a PPDU according to an embodiment of this application. Compared with FIG. 16, in this embodiment, there is only one EHT-SIG-A field, and the EHT-SIG-A field may be the EHT-SIG-A field of the AP 1. In this case, the AP 1 and the AP 2 share the SIG-A field of the AP 1.

### Embodiment 3

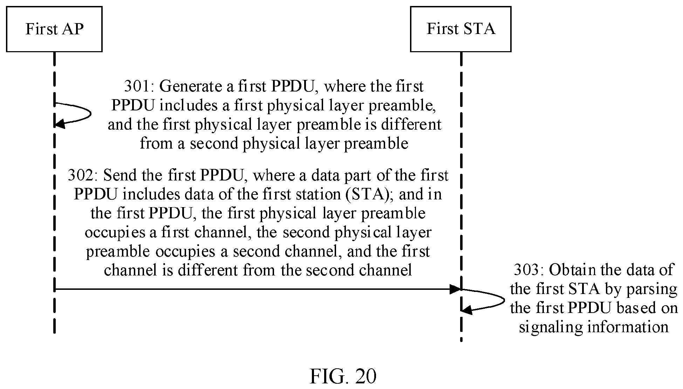

FIG. 20 is a flowchart of a PPDU sending method according to an embodiment of this application. In this embodiment, the PPDU sending method is described in detail from a perspective of interaction between a first AP and a first STA. This embodiment includes the following steps.

301: The first access point (AP) generates a first PPDU, where the first PPDU includes a first physical layer preamble, the first physical layer preamble is different from a second physical layer preamble, the second physical layer preamble is included in a second PPDU, the second PPDU is generated by a second AP, the first AP and the second AP are included in a same AP coordinated set, and the first physical layer preamble includes signaling information used to parse the first PPDU.

For example, refer to FIG. 14. The first physical layer preamble includes a SIG-A field of an AP 1, a SIG-B field of the AP 1, and the like.

302: The first AP sends the first PPDU, where a data part of the first PPDU includes data of the first station (STA); and in the first PPDU, the first physical layer preamble occupies a first channel, the second physical layer preamble occupies a second channel, and the first channel is different from the second channel.

Correspondingly, the first station receives the first PPDU. The first physical layer preamble of the first PPDU is sent omnidirectionally, and the data part is sent directionally. In a receiving process, the first station receives the first physical layer preamble on the first channel, and receives the data part of the first PPDU on the first channel and the second channel.

303: The first STA obtains the data of the first STA by parsing the first PPDU based on the signaling information.

According to the PPDU sending method provided in this embodiment of this application, when the first AP and the second AP perform coordinated transmission, the first physical layer preamble of the first AP and the second physical layer preamble of the second AP are sent on different channels. Therefore, a phenomenon of mutual interference between physical layer preambles can be eliminated, and a success rate of correctly receiving a PPDU by a STA can be increased.

In a feasible design, before generating the first PPDU, the first access point (AP) further sends a first frame to the second AP, where the first frame carries indication information, and the indication information is used to indicate that the first physical layer preamble occupies the first channel, and the second physical layer preamble occupies the second channel.

For example, indication information about a specific channel on which each AP in the AP coordinated set sends a physical layer preamble of the AP may be carried in a first frame, and the first frame may be a beacon frame or a SYNC frame. When the indication information is carried in the beacon frame, a STA always camps on a corresponding channel based on the indication in the beacon frame to receive the physical layer preamble. When the indication information is carried in the SYNC frame, a STA camps on a corresponding channel based on the indication in the SYNC frame to receive the physical layer preamble.

In this embodiment, a channel on which each AP in the AP coordinated set sends the physical layer preamble is indicated in the beacon frame or the SYNC frame, so that the first physical layer preamble of the first AP and the second physical layer preamble of the second AP are sent on different channels. Therefore, the phenomenon of mutual interference between physical layer preambles can be eliminated, and the success rate of correctly receiving a PPDU by a STA can be increased.

In a feasible design, the data part of the first PPDU occupies the first channel and the second channel.

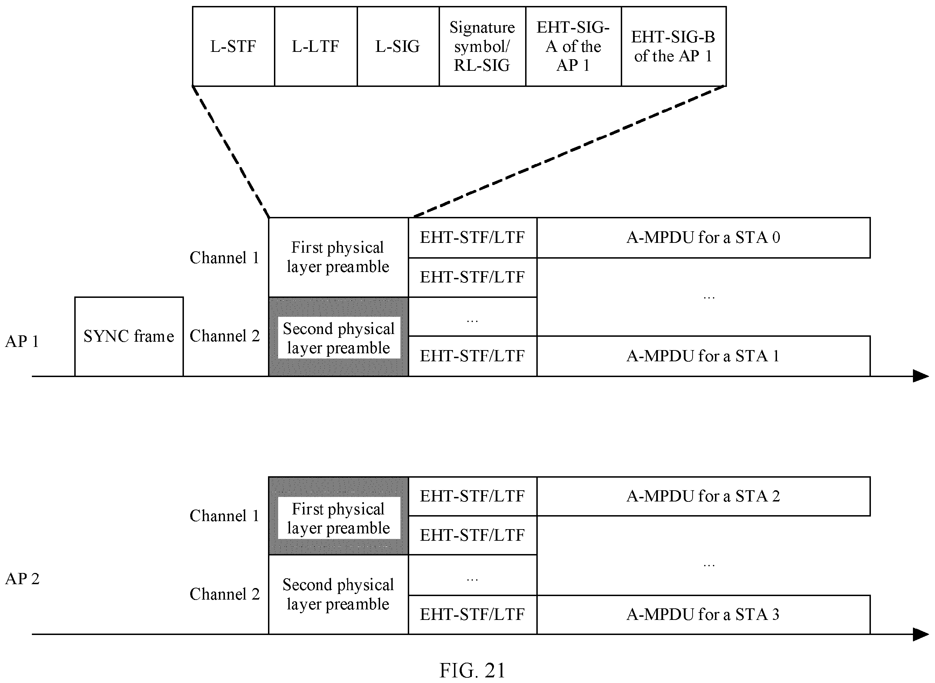

FIG. 21 is another schematic diagram of sending a PPDU according to an embodiment of this application. Refer to FIG. 14 and FIG. 21. The AP 1 and the AP 2 form an AP coordinated set, the AP 1 is a primary AP. The AP 1 sends a SYNC frame to the AP 2, and after a specific time interval, the AP 1 and the AP 2 synchronously send PPDUs. A first physical layer preamble of a first PPDU sent by the AP 1 includes an L-STF, an L-STF, an L-SIG field, an RL-SIG field/a signature symbol (signature symbol), an EHT-SIG-A field of the AP 1, and an EHT-SIG-B field of the AP 1. A second physical layer preamble of a second PPDU sent by the AP 2 includes an L-STF, an L-STF, an L-SIG field, an RL-SIG field/a signature symbol (signature symbol), an EHT-SIG-A field of the AP 2, and an EHT-SIG-B field of the AP 2. The first physical layer preamble of the first PPDU of the AP 1 is sent on a channel (channel, CH) 1, and the second physical layer preamble of the second PPDU of the AP 2 is sent on a CH 2. A data part of the first PPDU of the AP 1 is on an entire bandwidth, that is, sent on the CH 1 and the CH 2, and a data part of the second PPDU of the AP 2 is also sent on the entire bandwidth.

It should be noted that gray parts in FIG. 21 are only used to distinguish between channels, but do not indicate that the second physical layer preamble is sent by the AP 1 on the channel 2, and that the first physical layer preamble is sent by the AP 2 on the channel 1.

The foregoing describes in detail the PPDU sending method and receiving method according to the embodiments of this application. The following describes communication apparatuses in embodiments of this application.

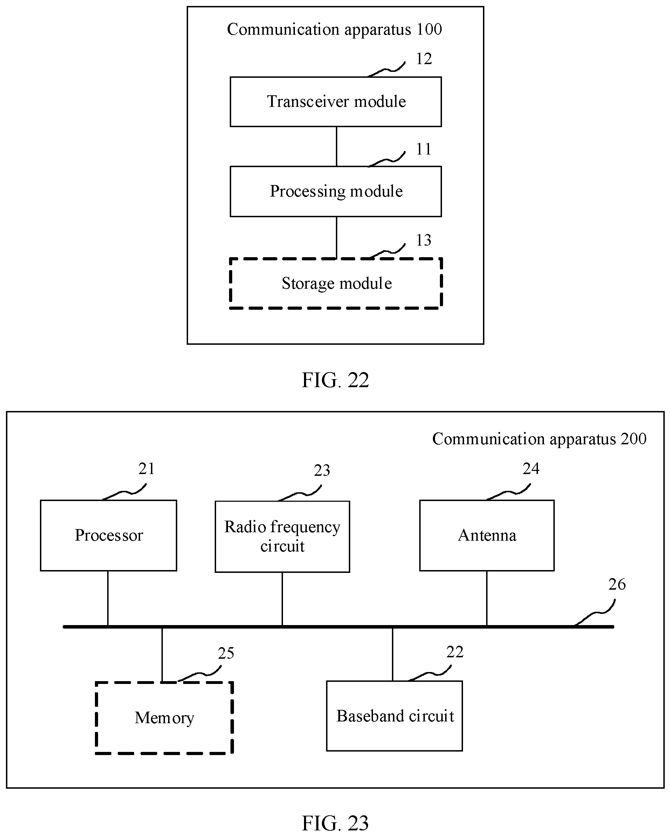

FIG. 22 is a schematic diagram of a structure of a communication apparatus according to an embodiment of this application. The communication apparatus 100 in this embodiment may be the AP in the foregoing method embodiments, or may be one or more chips in the AP. The communication apparatus 100 may be configured to perform some or all functions of the AP in the foregoing method embodiments. The communication apparatus 100 may include a processing module 11 and a transceiver module 12. Optionally, the communication apparatus 100 may further include a storage module 13.

For example, the processing module 11 may be configured to perform step 101, 201, 301, or the like in the foregoing method embodiments.

The transceiver module 12 may be configured to perform step 102, 202, 302, or the like in the foregoing method embodiments.

Alternatively, the communication apparatus 100 may be configured as a general purpose processing system, for example, generally referred to as a chip. The processing module 11 may include one or more processors that provide a processing function. The transceiver module 12 may be, for example, an input/output interface, a pin, or a circuit. The input/output interface may be configured to be responsible for information interaction between the chip system and the outside. The processing module may execute computer-executable instructions stored in the storage module, to implement functions of the AP in the foregoing method embodiments. In an example, the storage module 13 optionally included in the communication apparatus 100 may be a storage unit in the chip, for example, a register or a cache. The storage module 13 may be alternatively a storage unit that is in the AP and that is located outside the chip, for example, a read-only memory (read-only memory, ROM for short), another type of static storage device that can store static information and instructions, or a random access memory (random access memory, RAM for short).

FIG. 23 is a schematic diagram of a structure of another communication apparatus according to an embodiment of this application, and a schematic block diagram of the communication apparatus 200. The communication apparatus 200 in this embodiment of this application may be the AP in the foregoing method embodiments, and the communication apparatus 200 may be configured to perform some or all functions of the AP in the foregoing method embodiments. The communication apparatus 200 may include a processor 21, a baseband circuit 22, a radio frequency circuit 23, and an antenna 24. Optionally, the communication apparatus 200 may further include a memory 25. Components of the communication apparatus 200 are coupled together by using a bus 26. In addition to a data bus, the bus system 26 further includes a power bus, a control bus, and a status signal bus. However, for clarity of description, various buses are denoted as the bus system 26 in the figure.

The processor 21 may be configured to control the AP, and perform processing that is performed by the AP in the foregoing embodiments. The processor 21 may perform processing processes related to the AP in the foregoing method embodiments and/or other processes in the technology described in this application, and may further run an operating system, manage the bus, and execute a program or instructions stored in the memory.

The baseband circuit 22, the radio frequency circuit 23, and the antenna 24 may be configured to support the AP in sending/receiving information to/from the STA in the foregoing embodiments, to support the AP in performing wireless communication with the STA.

The memory 25 may be configured to store program code and data of the AP, and the memory 25 may be the storage module 13 in FIG. 22. It may be understood that the baseband circuit 22, the radio frequency circuit 23, and the antenna 24 may be further configured to support communication between the AP and another network entity, for example, communication between the AP and a network element on a core network side. As shown in FIG. 23, the memory 25 is separated from the processor 21. However, a person skilled in the art very easily understands that the memory 25 or any part thereof may be located outside the communication apparatus 200. For example, the memory 25 may include a transmission cable and/or a computer product separated from a wireless node. The media may be accessed by the processor 21 through the bus interface 26. Alternatively, the memory 25 or any part thereof may be integrated into the processor 21, for example, may be a cache and/or a general purpose register.

It may be understood that, FIG. 23 shows only a simplified design of the AP. For example, in actual application, the AP may include any quantity of transmitters, receivers, processors, memories, and the like, and all APs that can implement the present invention fall within the protection scope of the present invention.

In a possible implementation, the communication apparatus on the AP side may alternatively be implemented by using the following: one or more field programmable gate arrays (field programmable gate arrays, FPGAs), a programmable logic device (programmable logic device, PLD), a controller, a state machine, gate logic, a discrete hardware component, any other proper circuit, or any combination of circuits that can perform various functions described in this application. In still another example, an embodiment of this application further provides a computer storage medium. The computer storage medium may store program instructions used to indicate any one of the foregoing methods, so that a processor executes the program instructions to implement the method and the function that are related to the AP in the foregoing method embodiments.

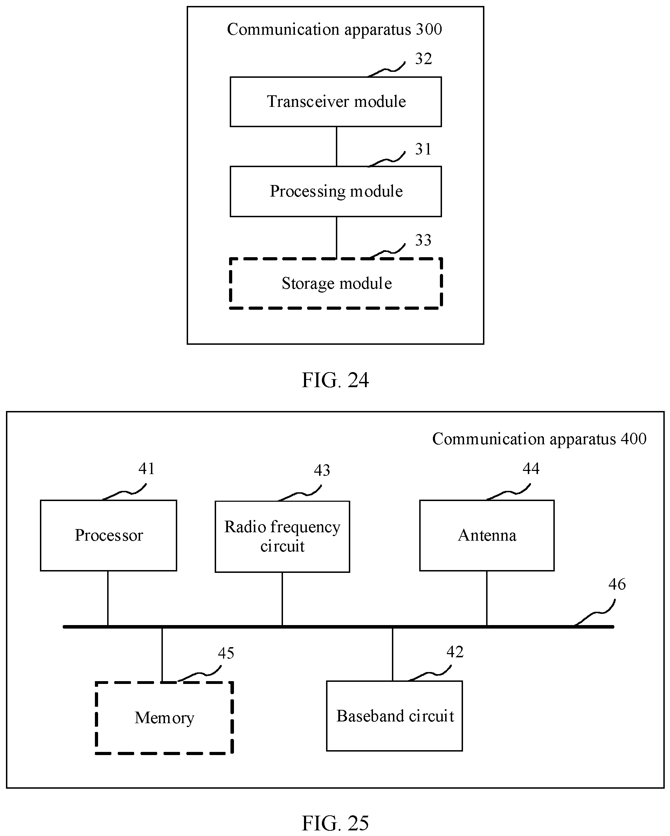

FIG. 24 is a schematic diagram of a structure of still another communication apparatus according to an embodiment of this application. The communication apparatus 300 in this embodiment may be the STA in the foregoing method embodiments, or may be one or more chips in the STA. The communication apparatus 300 may be configured to perform some or all functions of the STA in the foregoing method embodiments. The communication apparatus 300 may include a processing module 31 and a transceiver module 32. Optionally, the communication apparatus 300 may further include a storage module 33.

For example, the processing module 31 may be configured to perform step 103, 203, 303, or the like in the foregoing method embodiments.

The transceiver module 32 may be configured to perform step 102, 202, 302, or the like in the foregoing method embodiments.

Alternatively, the communication apparatus 300 may be configured as a general purpose processing system, for example, generally referred to as a chip. The processing module 31 may include one or more processors that provide a processing function. The transceiver module 32 may be, for example, an input/output interface, a pin, or a circuit. The input/output interface may be responsible for information interaction between the chip system and the outside. The processing module may execute computer-executable instructions stored in the storage module, to implement functions of the STA in the foregoing method embodiments. In an example, the storage module 33 optionally included in the communication apparatus 300 may be a storage unit in the chip, for example, a register or a cache. The storage module 33 may be alternatively a storage unit that is in the STA and that is located outside the chip, for example, a read-only memory (read-only memory, ROM for short), another type of static storage device that can store static information and instructions, or a random access memory (random access memory, RAM for short).

FIG. 25 is a schematic block diagram of still another communication apparatus according to an embodiment of this application. The communication apparatus 400 in this embodiment of this application may be the STA in the foregoing method embodiments, and the communication apparatus 400 may be configured to perform some or all functions of the STA in the foregoing method embodiments. The communication apparatus 400 may include a processor 41, a baseband circuit 42, a radio frequency circuit 43, and an antenna 44. Optionally, the communication apparatus 400 may further include a memory 45. Components of the communication apparatus 400 are coupled together by using a bus 46. In addition to a data bus, the bus system 46 further includes a power bus, a control bus, and a status signal bus. However, for clarity of description, various buses are denoted as the bus system 46 in the figure.

The processor 41 may be configured to control the STA, and perform processing that is performed by the STA in the foregoing embodiments. The processor 41 may perform processing processes related to the STA in the foregoing method embodiments and/or other processes in the technology described in this application, and may further run an operating system, manage the bus, and execute a program or instructions stored in the memory.

The baseband circuit 42, the radio frequency circuit 43, and the antenna 44 may be configured to support the STA in sending/receiving information to/from the AP in the foregoing embodiments, to support the STA in performing wireless communication with the AP.

The memory 45 may be configured to store program code and data of the STA, and the memory 45 may be the storage module 33 in FIG. 24. It may be understood that the baseband circuit 42, the radio frequency circuit 43, and the antenna 44 may be further configured to support communication between the STA and another network entity, for example, communication between the STA and a network element on a core network side. As shown in FIG. 25, the memory 45 is separated from the processor 41. However, a person skilled in the art very easily understands that the memory 45 or any part thereof may be located outside the communication apparatus 400. For example, the memory 45 may include a transmission cable and/or a computer product separated from a wireless node. The media may be accessed by the processor 41 through the bus interface 46. Alternatively, the memory 45 or any part thereof may be integrated into the processor 41, for example, may be a cache and/or a general purpose register.

It may be understood that, FIG. 25 shows only a simplified design of the STA. For example, in actual application, the STA may include any quantity of transmitters, receivers, processors, memories, and the like, and all STAs that can implement the present invention fall within the protection scope of the present invention.

In a possible implementation, the communication apparatus on the STA side may alternatively be implemented by using the following: one or more field programmable gate arrays (field programmable gate arrays, FPGAs), a programmable logic device (programmable logic device, PLD), a controller, a state machine, gate logic, a discrete hardware component, any other proper circuit, or any combination of circuits that can perform various functions described in this application.

In still another example, an embodiment of this application further provides a computer storage medium. The computer storage medium may store program instructions used to indicate any one of the foregoing methods, so that a processor executes the program instructions to implement the method and the function that are related to the STA in the foregoing method embodiments.

The processor in the apparatus 200 and the apparatus 400 may be a general purpose processor, for example, a general purpose central processing unit (CPU), a network processor (Network Processor, NP), or a microprocessor, or may be an application-specific integrated circuit (application-specific integrated circuit, ASIC), or one or more integrated circuits configured to control program execution in the solutions of this application. The processor may also be a digital signal processor (Digital Signal Processor, DSP), a field programmable gate array (Field Programmable Gate Array, FPGA) or another programmable logic device, a discrete gate or a transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations based on program instructions stored in the memory.

The memory in the apparatus 200 and the apparatus 400 may further store an operating system and another application program. Specifically, the program may include program code, and the program code includes computer operation instructions. More specifically, the memory may be a read-only memory (read-only memory, ROM), another type of static storage device that can store static information and instructions, a random access memory (random access memory, RAM), another type of dynamic storage device that can store information and the instructions, a magnetic disk memory, or the like. The memory may be a combination of the foregoing memories. In addition, the computer-readable storage medium/memory may be located in the processor, or may be located outside the processor, or distributed in a plurality of entities including a processor or a processing circuit. The computer-readable storage medium/memory may be specifically embodied in a computer program product. For example, the computer program product may include a computer-readable medium in a packaging material.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to this application are generated. The computer may be a general purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer convergence protocol protocol data unit, PPDU, sending method, comprising:
generating, by a first access point, AP, a first PPDU, wherein the first PPDU comprises a first physical layer preamble, the first physical layer preamble is the same as a second physical layer preamble, the second physical layer preamble is comprised in a second PPDU, the second PPDU is generated by a second AP, the first AP and the second AP are comprised in a same AP coordinated set, and the AP coordinated set serves a first station, STA, wherein the first physical layer preamble comprises signaling information, the signaling information comprises a signaling A field and a signaling B field, wherein the signaling A field comprises transmission parameters of the first PPDU and the second PPDU, the signaling B field comprises resource allocation information that carries the data of the first STA, and the signaling A field comprises a special basic service set, BSS, color, and the special BSS color is used to indicate a special BSS established by the AP coordinated set; and
sending, by the first AP, the first PPDU, wherein a data part of the first PPDU comprises data of the first STA.

2. The method according to claim 1, wherein
the signaling A field further comprises indication information, and the indication information is used to indicate whether the first PPDU is a coordinately transmitted PPDU; or
the special BSS color is further used to indicate that the first PPDU is a coordinately transmitted PPDU.

3. The method according to claim 1 or 2, wherein the signaling B field further comprises an AP selection field, and the AP selection field is used to indicate, to the first station, the first AP that sends the first PPDU in the AP coordinated set.

4. The method according to any one of claims 1 to 3, wherein before the sending, by the first AP, the first PPDU, the method further comprises:
sending, by the first AP, a beacon frame, wherein the beacon frame carries at least one of the following information: a flag bit of the special BSS and AP indication information, wherein the flag bit of the special BSS is used to indicate that the special BSS is used for coordinated transmission, and the AP indication information is used to indicate an AP in the AP coordinated set.

5. The method according to any one of claims 1 to 4, wherein before the sending, by the first AP, the first PPDU, the method further comprises:
sending, by the first AP, the beacon frame, wherein the beacon frame carries a BSS identifier of a BSS consisting of the AP in the AP coordinated set, and the BSS identifier is used for communication between the first AP and the second AP; and
receiving, by the first AP, a response frame sent by a second station comprised in the second AP, wherein the second station is associated with the first AP, and the response frame is used to indicate whether the second AP joins the AP coordinated set.

6. A physical layer convergence protocol protocol data unit, PPDU, receiving method, comprising:
receiving, by a first station, STA, a first PPDU sent by a first AP, wherein the first PPDU is generated by the first AP, the first PPDU comprises a first physical layer preamble, the first physical layer preamble is the same as a second physical layer preamble, the second physical layer preamble is comprised in a second PPDU, the second PPDU is generated by a second AP, the first AP and the second AP are comprised in a same AP coordinated set, and the AP coordinated set serves the first STA, wherein the first physical layer preamble comprises signaling information, the signaling information comprises a signaling A field and a signaling B field, wherein the signaling A field comprises transmission parameters of the first PPDU and the second PPDU, the signaling B field comprises resource allocation information that carries the data of the first STA, and the signaling A field comprises a special basic service set, BSS, color, and the special BSS color is used to indicate a special BSS established by the AP coordinated set; and
obtaining, by the first STA, data of the first STA by parsing a data part of the first PPDU based on the special BSS color and the signaling information.

7. The method according to claim 6, wherein
the signaling A field further comprises indication information, and the indication information is used to indicate whether the first PPDU is a coordinately transmitted PPDU; or
the special BSS color is further used to indicate that the first PPDU is a coordinately transmitted PPDU.

8. The method according to claim 6 or 7, wherein the signaling B field further comprises an AP selection field, and the AP selection field is used to indicate, to the first station, the first AP that sends the first PPDU in the AP coordinated set.

9. The method according to any one of claims 6 to 8, wherein before the receiving, by a first station, STA, a first PPDU sent by a first AP, the method further comprises:
receiving, by the first STA, a beacon frame sent by the first AP, wherein the beacon frame carries at least one of the following information: a flag bit of the special BSS and AP indication information, wherein
the flag bit of the special BSS is used to indicate that the special BSS is used for coordinated transmission, and the AP indication information is used to indicate an AP in the AP coordinated set; and
determining, by the first STA, the flag bit of the special BSS and the AP in the coordinated set based on the beacon frame.

10. A communication apparatus, comprising a processor and a memory, wherein the memory is configured to store instructions, and the processor is configured to execute the instructions stored in the memory, to implement the data processing method according to any one of claims 1 to 5.

11. A communication apparatus, comprising a processor and a memory, wherein the memory is configured to store instructions, and the processor is configured to execute the instructions stored in the memory, to implement the data processing method according to any one of claims 6 to 9.

12. A computer-readable storage medium, wherein the computer-readable storage medium stores computer-executable instructions; and when the computer-executable instructions are executed by at least one processor, the data processing method according to any one of claims 1 to 5 is implemented.

13. A computer-readable storage medium, wherein the computer-readable storage medium stores computer-executable instructions; and when the computer-executable instructions are executed by at least one processor, the data processing method according to any one of claims 6 to 9 is implemented.

14. A computer program product, wherein the computer program product comprises instructions; and when the computer program product runs on a computer, the computer is enabled to perform method according to any one of claims 1 to 5.

15. A computer program product, wherein the computer program product comprises instructions; and when the computer program product runs on a computer, the computer is enabled to perform method according to any one of claims 6 to 9.
